# EUROPÄISCHE PATENTSCHRIFT

(11) **EP 1 440 423 B1**
(45) Veröffentlichungstag und Bekanntmachung des Hinweises auf die Patenterteilung: **09.05.2012**
(21) Anmeldenummer: 02792774.8
(22) Anmeldetag: 18.11.2002
(51) Int. Cl.: G06Q 40/00, G06Q 20/00

(54) **VERFAHREN UND VORRICHTUNG ZUM COMPUTERIMPLEMENTIERTEN VERARBEITEN VON ELEKTRONISCHEN ZAHLUNGSAUFTRÄGEN**
METHOD AND DEVICE FOR THE COMPUTER-IMPLEMENTED PROCESSING OF ELECTRONIC PAYMENT ORDERS
PROCEDE ET DISPOSITIF DE TRAITEMENT INFORMATIQUE D'ORDRES DE PAIEMENT ELECTRONIQUES

(30) Priorität: 16.11.2001 US 331470 P
(43) Veröffentlichungstag der Anmeldung: 28.07.2004
(73) Patentinhaber: SAP AG, 69190 Walldorf (DE)
(72) Erfinder: GUTBROD, Roger, 69207 Sandhausen (DE); HAFNER, Gerhard, 69214 Eppelheim (DE); WEGENER, Jörg, 69226 Nussloch (DE); SCHEUERMANN, Hans-Dieter, 69488 Birkenau (DE); ARMBRUSTER Thomas, 69190 Walldorf (DE); DEDEKE, Martin, 69168 Wiesloch (DE); KLEIN-REESINK, Markus, 69190 Walldorf (DE); BEIFUSS, Kurt, 69469 Weinheim (DE); HAASE, Jörg, 69190 Walldorf (DE); ABT, Jürgen, 69231 Rauenberg (DE); EGETOFT, Karsten, 69190 Walldorf (DE)
(74) Vertreter: Hössle Patentanwälte Partnerschaft
(86) Internationale Anmeldenummer: PCT/EP2002/012920
(87) Internationale Veröffentlichungsnummer: WO 2003/042941

(56) Entgegenhaltungen:
- 'KUNDENWUENSCHE ERKENNEN UND INDIVIDUELL ERFUELLEN' SAP-INFO BANKEN UND VERSICHERUNGEN 01 Oktober 2002, Seiten 1 - 40, XP000962443

## Beschreibung

Die vorliegende Erfindung betrifft ein Verfahren und eine Vorrichtung zum computerimplementierten Verarbeiten von elektronischen Zahlungsaufträgen.

Erfindungsgemäß werden ein Verfahren mit den Merkmalen des Anspruchs 1 und eine Vorrichtung mit den Merkmalen des Anspruchs 6 vorgeschlagen.

Demnach werden elektronische Zahlungsaufträge in einem ersten Schritt in einem Auftragseingangsbearbeiter (Eingangsbearbeiter) analysiert. Im Rahmen dieser Analyse erfolgt eine Auftrennung der Gesamtauftragsdaten in Zahlungsauftragsdaten, die zu einer Bearbeitung des Zahlungsauftrags notwendig sind, und in Buchungsdaten, die zur Bearbeitung des Zahlungsauftrags nicht notwendig sind. Die zur Bearbeitung des Zahlungsauftrags notwendigen Zahlungsauftragsdaten werden dann in ein einheitliches Metaformat zur Bearbeitung in einer nachgeschalteten Zahlungsabwicklungseinrichtung oder Zahlungsmaschine (Payment Engine) konvertiert. Die zur Bearbeitung des Zahlungsauftrags nicht notwendigen Buchungsdaten werden zusammen mit einer Verknüpfungsanweisung in einer Datenbank zwischengespeichert. Die konvertierten Zahlungsauftragsdaten werden daraufhin in der nachgeschalteten Zahlungsmaschine verarbeitet, in dem für jeden Zahlungsempfänger automatisch eine Leitwegerkennung und eine Clearingerkennung (Clearingvereinbarung) sowie, abhängig von der Clearingvereinbarung, eine interne Bereitstellung des Zahlungsauftragspostens erfolgt. Schließlich werden die in der Zahlungsmaschine automatisch erzeugten Angaben zu einem ausgehenden Zahlungsauftrag in einem Auftragsausgangsbearbeiter (Ausgangsbearbeiter) auf ein vom Zahlungsempfänger abhängiges individuelles Zieldatenformat konvertiert und durch die in der Datenbank zwischengespeicherten Daten ergänzt. Durch das erfindungsgemäße Vorgehen ist eine Reduzierung der notwendigen Hardware für ein computergestütztes Verarbeiten von Zahlungsaufträgen, eine erhebliche Reduzierung des Bearbeitungsaufwands durch Bedienpersonal und auch eine erhebliche Reduzierung der zu prozessierenden Daten verbunden, da die Payment Engine eine reine Prozeßsteuerung ohne Buchhaltungswissen darstellt, was zu einer geringeren Datenredundanz führt.

In vorteilhafter Ausgestaltung der Erfindung erfolgt eine automatische Prüfung des Auftraggebers des Zahlungspostens und - nach positiver Prüfung - eine sofortige und Weitergabe des Zahlungsauftrags an den Auftragsausgangsbearbeiter.

In anderer vorteilhafter Ausgestaltung der Erfindung ist die interne Bereitstellung des Zahlungsauftragspostens eine interne Reservierung des Zahlungspostens, wobei es sich um eine auftraggeberorientierte und/oder eine empfängerorientierte Reservierung handeln kann. Dies ermöglicht die automatische Erzeugung von Sammelauftragsposten, da eine Kumulierung von Reservierungen eines Auftragsgebers und/oder eines Empfängers vorgenommen werden kann, verbunden mit einer Buchung sämtlicher Zahlungsposten eines Auftragsgebers bzw. Empfängers zu einem gegebenen Zeitpunkt, insbesondere nach Ablauf einer gegebenen Zeitspanne (bspw. Ende des Arbeitstages). Es ist jedoch auch denkbar, den Zeitpunkt von der Höhe des aufgelaufenen reservierten Betrages abhängig zu machen.

In besonders vorteilhafter Ausgestaltung der Erfindung sind zwei oder mehr erfindungsgemäße Zahlungsabwicklungseinrichtungen (Payment Engines) in einem Rechenzentrum zusammengefaßt.

Die Erfindung erstreckt sich selbstverständlich auch auf Computerprogramme mit Programmcodemitteln, die dazu geeignet sind, bei Ablauf des Computerprogramms auf einem Computer ein erfindungsgemäßes Verfahren auszuführen, sowie auf computerlesbare Datenträgermedien mit darauf abgespeicherten erfindungsgemäßen Computerprogrammen und auf Computerprogrammprodukte mit derartigen computerlesbaren Datenträgermedien.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt in schematischer Blockdarstellung eine erfindungsgemäße Ziel-Applikationslandschaft.
- Figur 2: zeigt ebenfalls in schematischer Blockdarstellung die Komponenten des erfindungsgemäßen Account Managements.
- Figur 3: zeigt in schematischer Blockdarstellung das Zusammenspiel der erfindungsgemäßen Komponenten innerhalb der Umsatzverarbeitung (wobei DispoOffice für Posting Control Office, DispoRules für Posting Control Rules, Dispo Events für Posting Control Events bzw. Posting Locks und DispoEvent Handler für Posting Lock Manager steht).
- Figur 4: zeigt in schematischer Blockdarstellung den Aufbau des erfindungsgemäßen Posting Lock Office.
- Figur 5: zeigt in schematischer Blockdarstellung eine Übersicht über die Struktur der Kernapplikation Account Management.
- Figur 6: zeigt in schematischer Blockdarstellung die Einbettung der Erfindung in ein Systemumfeld.
- Figur 7: veranschaulicht die Erfindung am Beispiel eines Verarbeitungsprozesses eines DTA-Files.
- Figur 8: zeigt ein Datenflussdiagramm am Beispiel einer Batchverarbeitung.
- Figur 9: zeigt eine Bildschirmanzeige (Screenshot) für die Leitwegpflege in der Payment Engine im Bereich Grunddaten.
- Figur 10: zeigt eine Bildschirmanzeige für die Clearingvereinbarungspflege in der Payment Engine im Bereich Grunddaten.
- Figur 11: zeigt ein vereinfachtes Beispiel für eine Leitwegfindung.
- Figur 12: zeigt eine Bildschirmanzeige für die Clearingvereinbarungspflege in der Payment Engine im Bereich Sammelverarbeitung.
- Figur 13: zeigt eine Bildschirmanzeige für die Pflege der Valutavereinbarung in der Payment Engine im Bereich Berechnungsdaten.
- Figur 14: zeigt eine Bildschirmanzeige mit einer Sammler-übersicht der Payment Engine im Bereich Grunddaten.
- Figur 15: zeigt in schematischer Darstellung ein erstes Beispiel für einen Rechenzentrumsverbund gemäß der Erfindung.
- Figur 16: zeigt in schematischer Darstellung ein zweites Beispiel für eine erfindungsgemäße Rechenzentrumsanordnung.

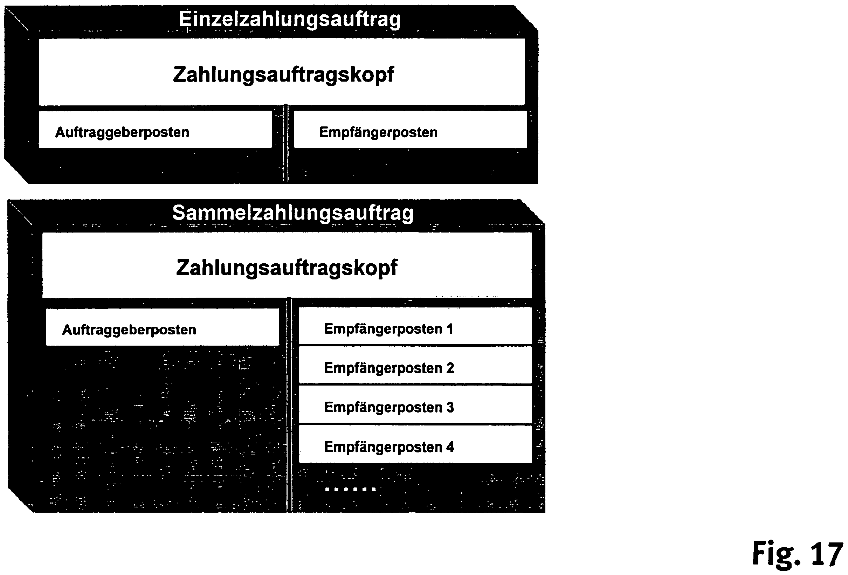

- Figur 17: zeigt schematisch einen Zahlungsauftrag in der Payment Engine.

Zunächst wird im folgenden das technische Umfeld der Erfindung beschrieben.

Die Anmelderin der vorliegenden Patentanmeldung hat in Zusammenarbeit mit internationalen Banken und Beratungshäusern eingehende Markt- und Wettbewerbsanalysen durchgeführt, deren Ergebnisse sich in den heutigen Softwarelösungen der Anmelderin und in den Weiterentwicklungsprojekten widerspiegeln. Auf Grundlage dieser Zusammenarbeit wurde in den letzten Jahren eine Ziel-Applikationslandschaft für Banken entwickelt, die sich an den Bedürfnissen der internationalen Finanzmärkte orientiert. Die einzelnen Applikationen dieser Softwarearchitektur stellen Lösungen und integrale Lösungsbestandteile der sogenannten e-business solution mySAP Banking dar. Im wesentlichen läßt sich mySAP Banking in die Bereiche Core Banking, SEM für Banken und CRM für Banken unterteilen.

Applikationen sind Informationssysteme, die eine betriebswirtschaftliche Primäraufgabe lösen und für sich allein einsatzfähig sind. Sie halten die Daten und Funktionen zur Lösung der Primäraufgabe, d.h. sie bündeln in einem engen fachlichen Zusammenhang stehende Aktivitäten. Eine Applikation kommuniziert über definierte Schnittstellen. In der Regel stellt eine Applikation eine kaufbare Lösung dar. Beispiele sind die Produkte Account Management, Profit Analyzer und Risk Analyzer.

In den folgenden Ausführungen werden Applikationen in Kernapplikationen und Zubehörapplikationen gegliedert:

Kernapplikationen sind die prägenden Applikationen der Applikationslandschaft. Zubehörapplikationen sind ergänzende Applikationen, die den Funktionsumfang von Kernapplikationen (auch mehreren) erweitern. Sie erfüllen Spezialaufgaben (Beispiele sind die Limitermittlung und Scoringmodelle) und verfügen über einen eigenen Investitionszyklus unabhängig von den Kernapplikationen. Hierdurch wird eine größere Flexibilität in der Anpassung an sich verändernde geschäftspolitische Ziele gewährleistet.

Die Applikationslandschaft der e-business solution mySAP Banking beschreibt die wesentlichen Applikationen, die für das Betreiben des Bankgeschäftes notwendig sind. Die Applikationen stehen in einem betriebswirtschaftlich-logischen Zusammenhang.

Die "Technische Architektur" beschreibt die Verknüpfung zwischen Applikationen durch eine Middleware. Die "Applikationsarchitektur" beschreibt den betriebswirtschaftlichen Inhalt einzelner Applikationen und das logische Zusammenspiel einzelner Applikationsbausteine. Die Bausteine werden als "Komponenten" bezeichnet.

Die Applikationen der SAP sind nach einem Schalenmodell aufgebaut: Im Kern befindet sich die Lösung für den internationalen Einsatz der Software, ergänzend hierzu werden länderspezifische Lösungen angeboten. Kundenindividuelle Ergänzungen können in einer weiteren Schale auf Basis von BTEs (Business Transaction Events) bzw. BADIs (Business Add-Ins) oder Nutzung von BAPIs (Business Application Programming Interfaces) angeschlossen werden.

### Folgende Anforderungen werden seitens Finanzinstituten und Banken an Applikationen gestellt:

- Kundenzentrierte und vertriebswegeneutrale Unterstützung der Sales-/Service-Prozesse.
- Schnelle Reaktionsmöglichkeit bei Systemanforderungen für die Abbildung von neuen Produkten.
- Integrationsmöglichkeit neuer Geschäftsprozesse.
- Produktspartenneutrale Abwicklung von Verträgen sowie einheitliche Bestandsführung.
- Integration und Konsistenz von interner und externer Rechnungslegung.

### Folgende Anforderungen werden an die Applikationslandschaft gestellt

- Flexible Modernisierung der Applikationslandschaft über Jahre hinweg (in Abhängigkeit vom Investitionszyklus der Applikationen).
- Schnelle Reaktionsmöglichkeiten auf sich ändernde Geschäftsmodelle (z.B. Outsourcing, Insourcing).
- Kundenindividuelle Erweiterungsfähigkeit ohne Modifikation der Standardlösung.
- Unterstützung von unterschiedlichen Migrationsszenarien.
- Flexible Integration in bestehende Applikationslandschaften bei Banken.
- Reduzierung der Schnittstellenkomplexität durch integrierte Verarbeitung innerhalb der SAP-Applikationslandschaft.

### Daraus folgt für die angestrebte Applikationslandschaft:

- Die einzelnen Applikationen sind austauschbar und erweiterbar. Insbesondere dürfen einzelne Applikationen nicht zu umfangreich sein. In einer integrierten Systemlandschaft der SAP müssen einzelne Applikationen deaktiviert und fremde Applikationen integriert werden können.
- Die Bank entscheidet durch die Auswahl der Applikationen über den gewünschten Umfang an Standardfunktionen.
- Jede Applikation muß so erweiterbar sein, daß eine Integration in kundenindividuelle Applikationslandschaften durch die SAP, von zertifizierten Partnern oder auch vom Kunden selbst entwickelt werden kann.

### Eindeutige Zuständigkeit von Applikationen

Betrachtet man zentrale Bankprozesse, so lassen sich hieraus verschiedene Aufgaben und Informationsbedürfnisse ableiten. Diese unterschiedlichen Anforderungen stehen teilweise in Widerspruch zueinander und verhindern die optimale Ausgestaltung einzelner Lösungen. So ist eine kundenzentrierte Prozeßbearbeitung die Anforderung der Vertriebs- und Service-Organisation an eine Lösung. Die kostensenkende Abwicklung von Verträgen und Konten erfolgt hingegen vertragsorientiert. Die interne und externe Rechnungslegung richtet die Prozesse wiederum an rechtlichen und organisatorischen Bedingungen aus.

Applikationen kommunizieren über öffentliche Schnittstellen (Public Interfaces). Direkte Zugriffe auf Applikationen sind nicht zulässig. Hierdurch ist gewährleistet, daß der Datenaustausch zwischen Applikationen transparent erfolgen kann. Innerhalb einer Applikation ist eine konsistente Datenbasis gewährleistet. Unerwartete Risiken aufgrund unbekannter Verknüpfungen und Zugriffe können minimiert werden. Durch diese Kommunikationsstruktur ist ein unmittelbarer Datenaustausch zwischen Applikationen über öffentliche Schnittstellen oder ein mittelbarer Datenaustausch über öffentliche Schnittstellen und eine betriebswirtschaftliche Middleware möglich. Beispielsweise kann das Posting Control Office über öffentliche Schnittstellen mit dem Account Management kommunizieren; der Datenaustausch kann aber auch über eine Middleware mit eigener Business-Intelligenz erfolgen.

Die Middleware ist ein zentrales Element zur Verwirklichung einer Applikationslandschaft. Die Middleware kann zwei Aufgaben erfüllen:
- Technische Kommunikation (Services)
- Betriebswirtschaftliche Steuerung (Business Rules)

Für die technische Kommunikation gibt es verschiedene Lösungen im Markt. Sie ermöglichen den Informationsaustausch zwischen verschiedenen Datenbanken in unterschiedlichen Formaten.

Die betriebswirtschaftliche Steuerung von Geschäftsvorfällen erfordert ein Regelwerk. Dieses wird als Business Rule definiert. Zur Ausprägung der Business Rules ist applikationsübergreifendes Prozeßwissen erforderlich.

Elemente der Business Rules sind Prozeßobjekte, die den Aufruf von Businessobjekten in den Einzelapplikationen initiieren. Beispiel "Vertragsanlage": Hier werden z.B. die Businessobjekte Geschäftspartner, Vertrag, Kartenprodukt angesprochen. Die Abbildung von Frontends und Backends mit Hilfe von Middleware ist eine weitgehend gängige Praxis. Aber die Unterstützung von Backend-Prozesssen zwischen Applikationen ist hier ebenfalls notwendig und noch wenig ausgeprägt. Deshalb ist bei Reinvestitionen in diesen Bereichen eine klare Konzeption der Prozeßsteuerung erforderlich.

Diese Konstruktion erlaubt auch eine stufenweise Migration mit sukzessiver Aufschaltung neuer Applikationen.

Für SAP hat das Zusammenspiel von Applikationen und Middleware eine strategische Bedeutung und wird derzeit aktiv gefördert. Im Rahmen der Analyse der technischen Machbarkeit spielt die Frage der Performance eine wichtige Rolle.

Die Struktur der Ziel-Applikationslandschaft zeigt "key functional areas", mit denen die bankbetriebswirtschaftlichen Lösungsfelder abgebildet werden können. Innerhalb einer solchen "area" können mehrere Applikationen liegen. Nicht dargestellt ist jener Bereich, der Applikationen enthält, die Banken für die Abwicklung ihrer Sekundärprozesse benötigen, wie beispielsweise Personalwirtschaft, Anlagenbuchhaltung, Materialverwaltung etc.

Grundlage für diese Struktur ist das Ziel, Applikationsbereiche (areas) auf einer hohen Ebene zu definieren, die einem bestimmten Hauptzweck dient. Hierdurch lassen sich Applikationen ableiten und klare Zuständigkeiten definieren. Redundante Applikationen und Funktionen können vermieden werden. Geprägt ist die Landschaft von folgenden Hauptaufgaben:
- Applikationen zur kundenzentrierten Durchführung von Sales- und Serviceprozessen.
- Applikationen zur Durchführung und Kontrolle von Handelsprozessen.
- Applikationen zur vertragszentrierten hochperformanten Abwicklung.
- Applikationen zur rechtlich und organisatorisch induzierten Datenkalkulation und -aufbereitung für die Banksteuerung.
- Applikationen zur zentralen Bereitstellung von Daten, die die anderen Bereiche optimal unterstützen, ohne dort redundant geführt zu werden.

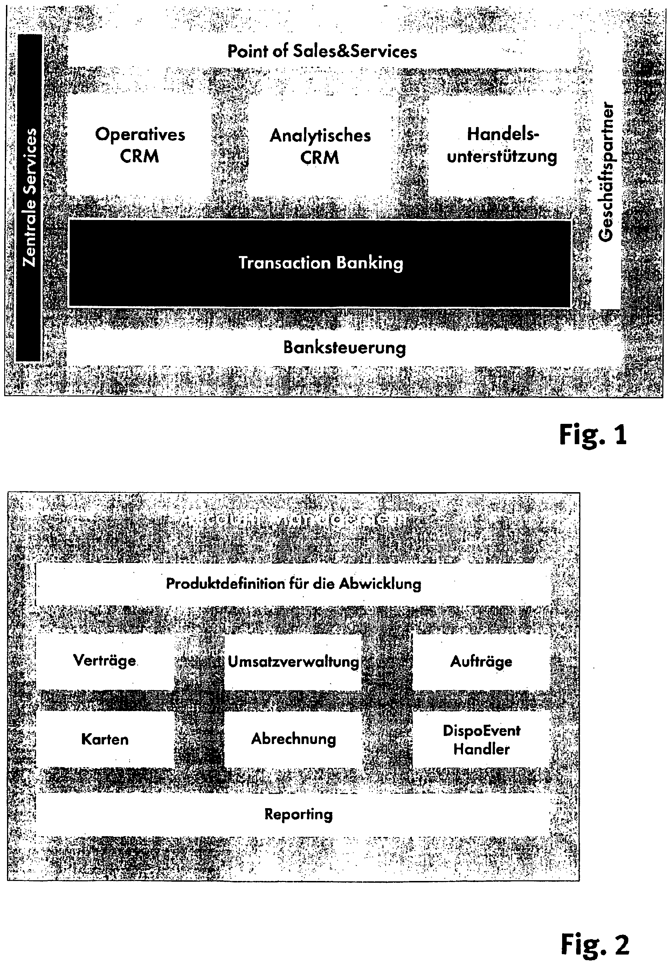

Figur 1 zeigt in schematischer Darstellung ein Blockdiagramm, das eine Ziel-Applikationslandschaft für eine erfindungsgemäße Kontoverwaltung darstellt.

In der obersten Ebene des Blockdiagramms der Figur 1 befindet sich bei dem Feld "Point of Sales & Services" die Kundenschnittstelle zu der Verkaufs- und Servicestelle der Bank, wie beispielsweise dem Callcenter bei Telefonbanking oder einem Filialschalter.

In der darunter liegenden zweiten Ebene des Blockdiagramms werden unter "CRM" den Kunden betreffende Daten gespeichert, operative Daten sind dabei Daten zu bestehenden Kunden, analytische Daten sind Daten zur Neukundenakquise.

In der dritten Ebene des Blockdiagramms schließlich werden unter "Transaction Banking" Verträge mit Kunden geschlossen. Diese Verträge betreffen Konten, Darlehen, Sicherheiten, Zahlungsverkehr, Depots usw.

In der untersten vierten Ebene befindet sich die Banksteuerung.

Jede Bank kommuniziert mit den Märkten und benötigt hierfür Schnittstellen. Aus dieser Schnittstelle werden in der Regel wertschöpfende Geschäfte und Geschäftsvorfälle generiert. Sie sind von zentraler Bedeutung für eine Bank, da sie auch das Erscheinungsbild repräsentieren. Selbstverständlich sind diese Schnittstellen vielfältig. Als wesentliche Schnittstellen können genannt werden:
- Die personalisierte Zwei-Wege-Kommunikation:
   Filialen, Callcenter, Abwicklungs-Office und Handelsräume. An dieser Schnittstelle ist eine Dokumentation und in der Regel die Bestätigung der Kommunikationsergebnisse notwendig. Diese Form der Kommunikation ist in der Regel sehr personal- und kostenintensiv.
- Die personalisierte Ein-Weg-Kommunikation:
   SB-Terminals, Internet, Telefon. Hier agiert eine Partei durch Dateneingabe und erhält ein systemerzeugtes Ergebnis. In diesem Falle ist die Bank nicht durch Mitarbeiter repräsentiert, sondern durch die Systemreaktion.
- Systemgetriebene Zwei-Wege-Kommunikation:
   elektronische Handelssysteme, Clearingsysteme, Zahlungsverkehrs-systeme, Marktdateneinspielung, Datenaustausch mit Auskunfteien, Meldungen an Aufsichtsbehörden. Hier erfolgt ein manueller Eingriff durch Bankmitarbeiter nur bei Störungen.

Während im Zahlungsverkehr schon in den letzten Jahrzehnten kontinuierlich an einem systemgetriebenen Datenaustausch gearbeitet wurde, hat für die Kundenbetreuung erst mit den Direktbanken ein innovativer Umbruch begonnen. Durch das Internet wurde der Umbruch beschleunigt und erfaßt nach dem Retailgeschäft (Online-Banking) nun auch das Wholesalegeschäft (z.B. Akkreditivabwicklung) und den Handel (z.B. Versteigerung von Emissionen; Zunahme elektronischer Handelsplätze) .

Diese neuen Schnittstellen müssen in die bestehende IT-Landschaft einer Bank integriert werden. Deshalb ist es sinnvoll, die Vertriebskanäle so zu entkoppeln und zu kapseln, daß eine Anpassung an die sich schnell wandelnden Trends zeitnah möglich ist. Diese schnelle Reaktionszeit ist nur erreichbar, wenn möglichst wenig betriebswirtschaftliche Logik in den Frontends enthalten ist und in einem "vertriebswegeneutralen" Applikationsbereich liegt.

In den Frontends sollten sämtliche kundeninitiierten Geschäftsvorfälle erfaßt werden. Nur so sind Synergien und Prozeßoptimierungen einer modernen Softwarelösung nutzbar. Ferner ist die organisatorische Entscheidung, die Erfassung bestimmter Geschäftsvorfälle direkt durch den Kunden zuzulassen, leichter realisierbar (z.B. die inzwischen übliche Erfassung von Zahlungsaufträgen am SB-Terminal oder über Internet bzw. Handy, die Bestellung von Reisezahlungsmitteln etc.).

Zwischen den Kommunikationsformen besteht eine Vernetzung. So können beispielsweise Telefonnutzer bei Problemen der Dateneingabe über einen Klick zu einem Callcenter weiterverbunden werden. Vor diesem Hintergrund wird es um so wichtiger, die Daten über alle Vertriebswege hinweg auf einem einheitlichen Stand zu halten, so daß alle Mitarbeiter über die Aktivitäten und die Historie des Kunden informiert sind.

Customer Relationship Management (CRM) umfaßt die gesamte Breite an Analysen, Aktivitäten und Dokumentationen im Rahmen von Kundenkontakten. Somit sind nicht nur Verkaufsprozesse und die zugehörige Marktbearbeitung relevant, sondern auch Services während der Vertragsdauer. CRM ist für SAP mehr als eine Datenbank mit Marketingdaten. Es umfaßt operative Prozesse mit entsprechender Datenhaltung. Viele Funktionen sind in derzeitigen Marktlösungen redundant für jeden "Channel" vorhanden. Eine unmittelbare, vertriebskanalunabhängige Verfügbarkeit von Geschäfts- und Vertriebsfunktionen ist das Ziel der SAP im Rahmen der CRM-Applikationen.

Im operativen CRM können folgende Prozesse definiert werden:
**Vertriebsprozesse** (Salesprozesse) sind fokussiert auf die Akquisition neuer Geschäftsabschlüsse, zum einen aus dem Kundenbestand heraus, zum anderen durch Gewinnung neuer Kunden. Je nach Geschäftsfeld (Retail-/Wholessale), Produkt (Zahlungsverkehr/Aktiv- oder Passivgeschäft bzw. Provisionsgeschäft) oder Kundengruppe ist dieser Prozeß unterschiedlich komplex, risiko- und ertragreich.
**Serviceprozesse** beinhalten die Kundenbetreuung während des Vertragslebenszyklusses. Stichpunkte sind u.a.: Sperrwünsche von Karten, Adreßänderungen, Reklamationen.

Zur Abbildung der voranstehend benannten Prozesse sind folgende kundenzentrierte und vertriebswegeneutrale Lösungen in diesem Applikationsbereich notwendig:

Das **Vertragsmanagement** unterstützt die Antrags- und Angebotserstellung sowie den Vertragsabschluß inkl. Korrespondenz und elektronischer Akte. Das Vertragsmanagement zeigt kundenzentriert die vertraglichen Vereinbarungen zwischen Bank und Kunde auf. Die Verträge können eine beliebige Komplexität erhalten. Als Beispiel sei hier ein Kreditvertrag mit Tilgung durch eine Lebensversicherung und Sicherstellung durch eine Bürgschaft genannt. Werden die Vertragsdaten aufgerufen, so enthalten sie eine Auswahl abwicklungsrelvanter Informationen, die um vertriebs- und serviceorientierte Daten ergänzt sind. Die Abwicklung dieser Verträge kann über mehrere Applikationen erfolgen, d.h. die Beziehungen zwischen einzelnen Verträgen oder Teilverträgen werden über die gesamte Laufzeit dokumentiert. Kundenzentrierte Sales- und Serviceprozesse haben ihren "Anker" in den Verträgen des Vertragsmanagements.

### Wichtige Prozesse:

- Abschluß und Dokumentation der vertraglichen und vorvertraglichen Kundenvereinbarungen.
- Inhaltliche und zeitliche Überwachung von vertraglichen und vorvertraglichen Bedingungen und Ereignissen (z.B. Auszahlungsvoraussetzungen; fehlende Legitimation; Prolongationstermine).

Im **Produktmanagement** erfolgt die marktbezogene Konfiguration von Produkten. Dieser Prozeß erfolgt in Abstimmung mit dem Abwicklungsbereich einer Bank. Die Darstellung von Produkten in diesem Applikationsbereich konzentriert sich auf die Marktpräsentation dieser Produkte, d.h. auf die variablen Ausprägungen, die ein Kunde wählen kann. Das Produkt muß im Retailgeschäft das Massengeschäft unterstützen und ein einheitliches Produktportfolio und damit Vertragsportfolio gewährleisten. Die Freiheitsgrade einzelner Produkte sind in der Regel begrenzt (z.B. hat ein Sparbrief in der Regel nur den Nominalbetrag und die Laufzeit als wählbare Parameter). Im Gegensatz zum Retailgeschäft ist das Wholesalegeschäft von hohen Freiheitsgraden innerhalb des Produktes geprägt, da die vertraglichen Vereinbarungen sehr individuelle Ausprägungen ermöglichen müssen.

Wichtige Services:
- Konfiguration der Produktparameter
- Produktkalkulation

Das **Aktivitäten- und Kontaktmanagement** ermöglicht es, Aktivitäten mit dem Kunden zu erfassen, zu überwachen und zu steuern. Ferner werden sämtliche Kontakte mit dem Kunden dokumentiert und können nach verschiedenen Merkmalen ausgewertet werden. Die Bank erhält einen "virtuellen" Kundenbetreuer, der allen Vertriebskanälen zur Verfügung steht. Z.B. ist eine Reklamation durch das Callcenter auch den Filialmitarbeitern sichtbar. Hierdurch ist ein einheitlicher Informationsstand für alle Mitarbeiter, die mit dem Kunden in Kontakt sind, gewährleistet. Die Kundenaktivitäten über das Internet sind in das Kontaktmanagement entsprechend zu integrieren.

Der Applikationsbereich "Analytisches CRM" umfaßt die Analyseprozesse zur Ausschöpfung von Geschäfts- und Kundenpotentialen und ihre Überführung in die operative Umsetzung (z.B. Marketingmaßnahmen).

**Analyseprozesse** bilden einen wesentlichen Aspekt eines effizienten Customer Relationship Managements. Dazu gehören Prozesse wie etwa Kosteninformationen zur Steuerung von Service-, Marketing- und Vertriebsaktionen, kundenspezifische Kennzahlen zur Ermittlung weiterer Kundenpotentiale, Informationen zu Wettbewerberprodukten etc. Primäraufgaben des analytischen CRM sind:
- Kundensegmentierung und -profilierung
- Kampagnen-Management
- Database-Marketing

Entsprechende Lösungen unterstützen die Bank bei der Planung und Durchführung von Marketingmaßnahmen, begonnen bei der Segmentierung und Profilierung von Kundenbeständen bis zur Planung, Durchführung und Kontrolle von Marketing-Kampagnen.

Das CRM ist erfindungsgemäß von strategischer Bedeutung, um eine vollständige Lösungskompetenz anbieten zu können.

Applikationen zur Unterstützung von Handelsaktivitäten sind durch hohe Produktspezialisierungen gekennzeichnet. Spezielles Know-how und kurze Investitionszyklen prägen diese Lösungen. Teilweise bilden die bestehenden Systeme für den Handelsraum Back-Office-Prozesse noch mit ab. Ein klarer Schnitt ermöglicht es, Abwicklungs- und Abrechnungsprozesse kostendegressiv verarbeiten zu können. Handelssysteme besitzen häufige rudimentäre Risikokontrollen. In Banken wird zunehmend die Anforderung gestellt, daß die Steuerungsinstrumente der Gesamtbanksteuerung direkt wertschöpfend im Handelsbereich zur Verfügung gestellt werden.

Wichtige Prozesse in diesem Bereich sind:
- Produktkonfiguration für das Handelsgeschäft
- Vertragsmanagement für das Handelsgeschäft
- Limitmanagement für den Handel (Exposuremanagement)

Erfindungsgemäß wird kein Handelssystem bereitgestellt, sondern die Überwachung der Handelsaktivitäten vorgenommen.

Im Bereich "Transaction Banking" liegt folgende Ausgangslage vor: Die Globalisierung des Bankenmarktes bringt u.a. die Intention der Marktteilnehmer nach effizienten Betriebsgrößen zum Ausdruck. Um die angestrebten Skalierungs- und Spezialisierungseffekte voll ausnutzen zu können, hat sich in den letzten Jahren eine teils innerbetriebliche, teils aber auch betriebsübergreifende Separation von Vertriebs- und Transaktionsbank herausgebildet. Outsourcing-Lösungen sind ein Beispiel dafür, daß die "Transaktionsbank" als eigenständiges Geschäftsmodell Erfolg hat. Doch auch bei einer Beibehaltung der Abwicklung im eigenen Unternehmen wird versucht, über Automatisierung und Zentralisierung die Abwicklung der Kundengeschäfte zu optimieren.

Derzeit operieren Banken in ihren Applikationslandschaften mit einer Vielzahl von produkt- bzw. spartenspezifischen Systemen. Die Abwicklungen sind kostenintensiv und nicht skalierbar. Vereinheitlichung von Abwicklungsprozessen und weitgehende Produktspartenneutralität im Rahmen des Bankgeschäfts sind wesentliche Anforderungen an diesen Applikationsbereich. Die Konfiguration von Abwicklungsprozessen soll durch Produktkonfigurationen beschleunigt und flexibilisiert werden. Die Möglichkeiten der Erweiterbarkeit der Software sind insbesondere unter Berücksichtigung des langen Investitionszyklusses von 15-20 Jahren in diesem Geschäftsbereich von entscheidender Bedeutung.

Für die SAP leistet dieser Applikationsbereich einen wesentlichen strategischen Beitrag zur Prozeßoptimierung in der internationalen Bankenwelt. Der Applikationsbereich Transaction Banking enthält als wesentliche Bestandteile *Zahlungsverkehr, Account Management (Abwicklung und Bestandsführung), Wertpapiersettlement und Depotverwaltung (Abwicklung und Bestandsführung) .*

Dem Account Management obliegt die Abwicklung des juristischen Bestandes i.S. von Geldströmen, d.h. es gibt Auskunft über die Forderungen und Verbindlichkeiten der Bank gegenüber Dritten. Die Bestandsführung des Account Managements ist die Quelle für Kontoauszüge und Saldenmitteilungen. Die Salden und Umsatzposten werden währungsrein, d.h. unbewertet gehalten. Der Bestand ist die Grundlage für die externe Rechnungslegung, d.h. daß die hier gehaltenen Vertrags- und Umsatzdaten die Datenbasis für die Bilanzerstellung bilden.

Ferner erfolgt im Account Management die Abwicklung der (Teil-)Verträge. Teilverträge deshalb, weil sich ein Kundenvertrag durch seine Komplexität auf mehrere Abwicklungsapplikationen verteilen kann. Bspw. kann im operativen CRM ein Produkt aus einem "Gehaltskonto mit Kreditkarte und Reiseversicherung" bestehen. Während das Gehaltskonto im Account Management verwaltet wird, erfolgt die Kartenabwicklung durch einen Provider und die Reiseversicherung bei einem Partner. Die Abwicklungsfunktionalität bedeutet, daß automatisierte Prolongationen oder Vertragsabrechungen erfolgen. Das bedeutet für das operative CRM, daß es vom Abwicklungsbestand die aktuellen Vertragsstände erfahren muß.

Im Account Management werden nur rechtsgültige Verträge geführt, d.h. Simulationsgeschäfte, Angebote und Anträge liegen außerhalb im operativen CRM.

Zahlungsverkehrssysteme sind herkömmlicherweise landesspezifische Lösungen. Das Zahlungsverkehrssystem übernimmt das formale Prüfen und ggf. das Verdichten und Verteilen von Umsätzen innerhalb der von der Bank genutzten Leitwege und Formate (internes und externes Routing).

Zahlungsverkehrssysteme arbeiten herkömmlicherweise im sogenannten Batchverfahren. Ergänzend ist eine Dialogerfassung von Zahlungsaufträgen notwendig, die die sofortige Real-Time-Buchung im Account Management auslösen kann (Zusatzapplikation im Zahlungsverkehr). Zwischen Zahlungsverkehrssystemen und Account Management ist eine hoch performante Kommunikation sicherzustellen.

Grundsätzlich ist im Rahmen der vorliegenden Erfindung die Verwaltung und Ausführung von Daueraufträgen eine Zusatzapplikation im Zahlungsverkehr (Zahlungsauftrag und der Dauerauftrag liegen innerhalb des Account Managements). Allerdings ist es auch denkbar, dies als eine ergänzende Komponente innerhalb des Account Management auszuführen (z.B. Umbuchung innerhalb des Account Managements).

Der Applikationsbereich Transaction Banking enthält neben den voranstehend beschriebenen Lösungen für die Geldseite auch Lösungen für Wertpapiergeschäfte und derivate Finanztransaktionen. Somit kann davon ausgegangen werden, daß in der Regel in diesem Applikationsbereich mehrere Bestandsführungssysteme liegen. Bei der Stückeverwaltung (Wertpapiersettlement / Depotverwaltung) besteht die Besonderheit, daß es sich im Bereich des Kundengeschäfts um eine Bestandsführung handelt, die nicht bilanzwirksam ist.

Die Geschäftspartnerlösung ist eine zentrale Applikation zur Speicherung und Verwaltung sämtlicher Kundeninformationen. Diese Lösung ist sehr eng verknüpft mit den Lösungen zum operativen und analytischen CRM. Aufgrund der Prozeßverknüpfung wird der Geschäftspartner im Rahmen dieser Prozesse gepflegt. Die Geschäftspartnerdaten stellen für jede Bank einen wesentlichen immateriellen Vermögenswert dar, dessen Wert durch die Qualität der Daten bestimmt wird.

Die Geschäftspartner-Applikation führt anwendungsübergreifend die Kundendaten einer Bank zusammen. Die wichtigsten Daten sind:
- Name und Anschrift des Geschäftspartners
- Ergänzende Daten in Abhängigkeit des Geschäftspartner-Typs (z.B. Geburtsdatum; Rechtsform) für alle Applikationsbereiche (z.B. Branchenschlüssel für Marketingselektionen oder Meldewesen)
- Beziehungen (z.B. Kreditnehmereinheit; Konzernstrukturen)
- Rollen
- Legitimationsdaten
- Bonitätsdaten/Daten von Auskunfteien/Scoring-Ergebnisse/Marketingcluster
- Daten der Haushaltsrechnung oder Bilanzanalysen
- Gesamtobligo

Beziehungen zwischen Geschäftspartnern können vielfältig miteinander verbunden werden. Für die Bildung von Kreditnehmer- und Risikoeinheiten sind Funktionen vorhanden.

Kunden treten in definierten Rollen gegenüber einer Bank auf (z.B. Kontoinhaber, Kreditnehmer, Bürge). Aus diesem Grund hat die Geschäftspartner-Applikation die Rolle eines Kunden als tragenden Bestandteil.

Der Applikationsbereich "Zentrale Services" enthält Lösungen, die das bankwirtschaftliche Geschäft der anderen Bereiche unterstützen.
- Sicherheitenverwaltung
- Output- und Inputmanagement/Korrespondenz
- Marktdaten, Wertpapierstammdaten, Info-Dienste
- Administrative Dienste: Berechtigungen, Organisationseinheiten

Die Sicherheitenverwaltung erhält durch die Basler Beschlüsse zur Kreditrisikounterlegung eine besondere Bedeutung. Durch differenzierte Zurechnung von Sicherheiten kann eine Bank die Eigenkapitalunterlegung optimieren und somit Kreditkosten senken. Ferner ist die Kenntnis über die Sicherheiten und deren Valutierung eine Quelle zur Akquisition von Neugeschäften. Die Erfassung von Sicherheiten erfolgt in der Regel bei Vertragsanbahnung und -abschluß und wird aus dem operativen CRM initiiert. Das Clearing von Sicherheiten erfolgt im Rahmen der Vertragsabwicklung.

Die Verwaltung von Sicherheiten umfaßt einerseits Sicherheiten, die die Bank entgegennimmt und andererseits Sicherheiten, die die Bank selbst stellt. Dieser zweite Aspekt ist derzeit in kaum einer Lösung am Markt vorhanden. Aber Aktivitäten einer Bank im derivativen Bereich benötigen auch die Dokumentation und Steuerung selbst gestellter Sicherheiten.

Die Sicherheitenverwaltung ist ein wichtiger Bestandteil der Gesamtlösung.

Die Applikation Output-Management/ausgehende Korrespondenz stellt eine Lösung für die optimale Kommunikation mit dem Kunden dar. Hierbei sind verschiedene Medien wie Postweg, Fax oder Email gefordert. Zwischen den Medien können Abhängigkeiten bestehen. Ferner sind gesetzliche Informationsfristen zu beachten (z.B. schriftlicher Kontoabschluß). Neben der Wahl der Output-Medien ist eine hohe Funktionalität bei der Steuerung und Aufbereitung der papiergebundenen Korrespondenz notwendig. Stichworte sind hier: Zentrale Druckaufbereitung; Formularwesen und Portooptimierung.

Die Erfindung unterstützt die korrespondenzorientierte Datenselektion und -aufbereitung. Die Weiterverarbeitung in einer Druck- und Versandstraße wird von Spezialanbietern durchgeführt.

Zum Input-Management/eingehende Korrespondenz gehört die Funktion "Elektronische Akte", sowie die generelle Verknüpfung von Dokumenten zu den Objekten Vertrag, Geschäftspartner, etc. Das Input-Management ist als zentraler Service im operativen CRM angesiedelt.

Hier handelt es sich um Lösungen, die innerhalb einer Bank Informationen für mehrere Applikationen zur Verfügung stellen.

Die Services "Administrative Dienste" dienen der ordnungsgemäßen Organisation des Bankbetriebes.

Die bestehenden Systemlandschaften sind bei den meisten Banken historisch gewachsen. Dabei spielen die operativen Systeme eine zentrale Rolle und beliefern nachgelagerte Systeme oft mit schon vorgerechneten Ergebnissen. Hierdurch entstehen oft unterschiedliche Ergebnisse und ein kompliziertes Überleitungs- und Abstimmungsverfahren. Die zeitnahe Entscheidungsgrundlage kann nicht mehr erstellt werden. Anforderung an die Banksteuerung sind deshalb Single Source der Datenbasis und Methodenkonsistenz über alle Auswertungsverfahren. Um das Ziel der Abgestimmtheit von Daten und Methoden zu erreichen, sind die Systeme einer Bank anders zu organisieren als bisher. Insbesondere ist ein klarer Schnitt zwischen den operativen Systemen und den Anwendungen der Gesamtbanksteuerung zu ziehen. Dies entlastet die operativen Systeme von den nachgelagerten Prozessen der Gesamtbanksteuerung und zentralisiert gleichzeitig die Prozesse. Die von den operativen Systemen erforderlichen Daten werden an einer Datenschnittstelle zur Verfügung gestellt. Die Banksteuerung betrifft nicht nur einzelne Institute, sondern ganze Konzerne. Gerade für die konzernweite Steuerung bringen Einheitlichkeit und Transparenz der Methoden sowie deren Darstellungen einen hohen Nutzen.

Folgende Fachbereiche werden erfindungsgemäß in eine Gesamtbanksteuerung integriert:
- Bilanzierung
- Profitability/Controlling
- Aktiv-/Passivsteuerung
- Risiko Controlling
   o Marktrisiko/Interne Modelle
   o Kredit-/Adressausfallrisiko
   o Kontrahentenrisiko
   o Länderrisiko
- Meldewesen
- Limitmanagement (analytisch)

Das Transaction Banking hat folgende zentrale Aufgaben:
- Steuerung des Geld- und Stückeverkehrs
- Abwicklung des Vertragbestandes
- Umsatzverwaltung und Führen des juristischen Bestandes geld- und stückeseitig)

Der Lösungsumfang des Transaction Banking wird im folgenden beschrieben.

Um die Funktionalität des Transaction Banking in den Gesamtzusammenhang der Applikationslandschaft einzubetten, wird zunächst auf folgende Aspekte eingegangen:
- Bearbeitungsmöglichkeiten
- Führende Datenhaltung
- Produktkonfiguration und Finanzkonditionen

### Bearbeitungsmöglichkeiten

Das Transaction Banking hat als eigener Applikationsbereich die Notwendigkeit, direkt bearbeitet werden zu können. Die Gründe hierfür können sein:
- Disposition und Limitmanagement zur Qualitätssicherung des Bestandes.
- Reklamationsbearbeitung, wie z.B. Gebührenkorrektur.
- Bestandsführungsprozesse, wie z.B. Bearbeitung und Abstimmung von CpD-Konten.
- Korrekturmaßnahmen aufgrund falscher oder fehlender Dateneinspielung (z.B. Valutakorrekturen, Buchungs-Korrekturen).

Traditionell spricht man von der Kontoführung als Ergänzung zum Kundenbetreuer. Die Erfindung ist derart gestaltet, daß die Implementierung des Kontoführers möglich ist. Diese Rolle umfaßt folgende zwei Arbeitsfelder:

Zum einen sind es Aktivitäten, die direkt nach außen zum Kunden wirken (z.B. Limitherabsetzung), und zum anderen Aktivitäten, die sich " ohne Kundenkontakt" nur auf den Bestand auswirken (z.B. CpD-Bearbeitung, Datenkorrekturen).

Es werden vorliegend zwei Arten von Bearbeitungsschichten im Transaction Banking unterschieden:
- Basic Maintenance Interface (BMI)
- Abwicklungs-Office (Account Management Office/AMO)

Bei dem *Basic Maintenance Interface handelt es sich* um eine Oberfläche für die Bearbeitung einzelner Funktionen.

Diese Oberfläche erlaubt manuelle Eingriffe in die ansonsten weitestgehend automatisierte Abwicklung. Alle Funktionen aus diesem Bereich verfügen damit über eine Oberfläche. Ein Clearingverfahren gewährleistet eine revisionsgerechte Bearbeitung. Hierfür ist ein Clearingtool geeignet, das systemseitig in die einzelnen Anwendungen eingebunden ist.

Diese Oberfläche wird standardmäßig zur Verfügung gestellt und die Berechtigungsprofile für diese Arbeitsplätze können vom Anwender als Rollen definiert werden, so daß jedem Anwender ein Menü zur Verfügung steht, das genau seinen Erfordernissen an das System entspricht.

Diese Oberflächen berücksichtigen keine kundenorganisatorischen Prozesse und Abwicklungsoptimierungen.

Das *Abwicklungs-Office* (Account Management Office/ AMO) gewährleistet die prozeßgesteuerte, d.h. workflow-unterstützte Bearbeitung von Geschäftsvorfällen. Innerhalb des Office gibt es verschiedene rollenbasierte Ausprägungen. Die Steuerung wird durch kundenindividuell einstellbare Vorgaben des SAP Workflow und damit verbundene Clearingverfahren (4- bis 8-Augen-Prinzip) unterstützt. Diese Offices verfügen im Vergleich zum Basic Maintenance Interface über eine eigene Datenhaltung (z.B. Dispositionsaufträge). Entscheidend für eine Officeeinbindung ist ein applikations-übergreifender Zugriff auf Funktionen und Daten für die Bearbeitung der Geschäftsvorfälle. Ferner sollen die Ergebnisse der Officeaktivitäten an das zentrale Kontaktmanagement übermittelt werden, damit eine vollständig kundenzentrierte Sicht bankweit möglich ist.

Heute liegen in der Abwicklung häufig Prozesse, die nicht in diesen Bereich gehören (z.B. Vertragseröffnung auf Postweg).

Ergänzend zeigen Marktstudien, daß es das Ziel von Banken ist, viele Back-Office-Prozesse um 70-80% alleine dadurch zu verschlanken, daß sie auf den Kunden selbst verlagert werden, wie es bereits im Internet-Banking möglich ist (z.B. Vertragseröffnung). Denn möglichst effizient wird die Abwicklung erst dann, wenn der Bankkunde selbst Geschäftsvorfälle wie bspw. eine Kartensperre initiieren oder die Zahlungsauftragsdisposition selbst durchführen kann.

### Führende Datenhaltung

In jeder Applikationslandschaft darf es für die Daten nur einen "Master" geben, auf den andere Applikationen direkt zugreifen oder periodische Updates bekommen.

Der Master für die Teilverträge, die abgewickelt werden sollen, liegt im Account Management, d.h. die gültigen Vertragsdaten und Konditionen sind dort hinterlegt.

Gleiches gilt für die Umsätze und Salden. Deshalb erfolgt auf dieser Basis die Datenbereitstellung für die Kontoauszüge und für ein Data Warehouse.

Inwieweit Applikationen Daten redundant halten müssen, wird stark von den Performance-Anforderungen bestimmt und hängt von der kundenindividuellen Situation ab.

### Produktkonfiguration und Finanzkonditionen

### Produktkonfiguration

Wie in der Ziel-Applikationslandschaft dargestellt, ist die Produktkonfiguration ein zentrales Thema einer modernen zukunftsfähigen Lösung. Die Produktkonfiguration erfolgt dabei unter drei unterschiedlichen Aspekten:
- Die Produktkonfiguration im operativen CRM. Hier ist die Produktkonfiguration an den Marketing- und Vertriebsbedürfnissen orientiert.
- Die Abbildung des Abwicklungsproduktes mit allen abwicklungsrelevanten Steuerungsparametern innerhalb des Transaction Banking/Account Managements.
   Ein Produkt gegenüber dem Markt kann hier in mehrere Teilprodukte für die Abwicklung aufgeteilt werden.
- Die Konfiguration von Produkten für die Banksteuerung. Diese Produkte haben in der Regel eine andere Granularität als die Abwicklungsprodukte. Auch der Datenhaushalt ist an den Auswertungsbedürfnissen und nicht an den Abwicklungsanforderungen ausgerichtet.

In den drei Hauptprozessen des Bankgeschäftes ist das Produkt unterschiedlich ausgeprägt, mit Ausnahme eines Bereiches: "Die Finanzkonditionen des Produktes". Aus diesem Grund werden die Finanzkonditionen ergänzend dargestellt.

Die Produktkonfiguration erstreckt sich letztlich über alle drei Applikationsbereiche. Es ist eine übergreifende Abstimmung zwischen den Applikationsbereichen im Rahmen einer neuen Produktimplementierung notwendig. Die Pflege der Produkte erfolgt in jedem Bereich für sich:

Im Transaction Banking findet die Produktpflege über das Customizing statt. Berechtigung und Clearing sind über das Transportverfahren der SAP gesichert.

Die Verbindung zwischen dem Operativen CRM und dem Transaction Banking erfolgt bei der Anlage eines konkreten Vertrages mit einem Kunden über eine öffentliche Schnittstelle (BAPI). In der Schnittstelle werden mitgegeben:
- der Kunde
- die Produkt-ID
- sowie die individuellen Vertragsausprägungen.

Durch die Produkt-ID wird die Verbindung zu dem Abwicklungs(teil)produkt hergestellt.

### Finanzkonditionen

Die Finanzkonditionen sind Grundlage für die Zins- und Gebührenberechnungen. Dadurch haben sie eine besondere Bedeutung und müssen in jedem Applikationsbereich zur Verfügung stehen. Performancekritisch ist der Zugriff im Rahmen der Bestandsführung. Um die Einheitlichkeit der Konditionen über die Grenzen einzelner Applikationsbereiche hinaus zu garantieren, stellt SAP die Finanzkonditionen des Account Managements über BAPIs allen anderen Applikationen zur Verfügung.

Figur 2 veranschaulicht anhand eines Blockdiagramms die Komponenten des "Account Managements". Das "Account Management" hat eine produktspartenneutrale Struktur. Im Fokus der Entwicklung liegen zunächst Zahlungsverkehrsprodukte und -services sowie Passiv- und Aktivprodukte des Retail Banking.

Die Vertragskomponente ist als Framework konzipiert. Daher ist es denkbar, sie als zentralen Service für alle Applikationen der Zielanwendungslandschaft einzusetzen.

Es ist denkbar, daß der Vertrag und sein Framework zukünftig als zentraler Service für alle Applikationen der Zielanwendungslandschaft eingesetzt werden kann.

Der Vertrag verwaltet im Account Management über Vertragsbausteine alle abwicklungsrelevanten Stammdaten. Verträge nutzen Produkte als Vorlage. Der Vertrag ist auf eine äußerst performante Abwicklung im Massengeschäft ausgerichtet.

Freigegebene Verträge werden in der Regel aus den Vorsystemen an das Vertragsmanagement über eine Schnittstelle (BAPI) weitergegeben. Während der Vertragslaufzeit kann aber damit gerechnet werden, daß auch direkt aus dem Transaction Banking heraus auf den Vertrag zugegriffen und Daten geändert werden. Besondere Verträge wie z.B. Verträge für CpD-Konten werden direkt im Account Management angelegt. Der Vertrag kennt den freigegebenen und nicht freigegebenen Zustand.

Für alle Vertragsdaten kann es in einer Applikationslandschaft nur einen "Master" geben. Dieser "Master" liegt für die Abwicklungsdaten im Account Management. Außerdem erfolgt die Abwicklung von Verträgen weitgehend automatisiert. Das heißt hier kennt man die aktuellen Vertragszustände (z.B. nach Prolongationen). Die Vertragsdaten werden an Schnittstellen zur Verfügung gestellt.

Zum Verständnis sei erwähnt, daß es natürlich auch Vertragsdaten gibt, die in anderen Applikationen verwaltet werden und dort als "Master" geführt werden (z.B. Schufa-Kennzeichen, Verfügungsberechtigung). Der zentrale Anker zum Zusammenführen aller Daten liegt im operativen CRM.

Wichtige Prozesse im Account Management sind:

Anlegen, Ändern, Prolongieren, Kündigen, Stornieren und Auflösen von Verträgen. Hierbei werden auch entsprechende Buchungen angestoßen.

Es werden zwei Ausprägungen von Verträgen unterstützt:
- Kontenverträge
- Kartenverträge (s. unten)

Die Unterstützung weiterer Vertragsparteien ist selbstverständlich möglich.

### Umsatzverwaltung

In der Abbildung und Abwicklung von Bewegungsdaten liegt die wesentliche Wertschöpfung des Account Managements. Die Lösung muß hoch performant sein und geringe Kosten verursachen. Weitere Anforderungen an die Lösung sind Realtime-Verarbeitung und 7 x 24 Stunden Verfügbarkeit.

Die Umsatzverwaltung bucht in Echtzeit die Einzelumsätze und steuert eine flexible Saldenfortschreibung. Die Abbildung der Bewegungen erfolgt am Konto. Einzelumsätze sind Zahlungsposten (Halbsätze), deren Grundlage einerseits Zahlungsaufträge und anderseits interne Abrechnungen (z.B. Zinsbelastung) sind. Ergänzend können Cash flows berechnet und weiterverarbeitet werden. Das Account Management hat eine Schnittstelle zur Annahme von Zahlungsposten (BAPI).

Die Umsatzverwaltung kennt keine offene Postenverwaltung mit entsprechendem Einzelpostenausgleich. Es ist eine Zahlungsüberwachung auf Saldenbasis denkbar, die z.B. den Eingang von Geldern im Zuge einer Festgeldanlage bzw. der Ratenzahlung bei Krediten steuert.

Eingehende Zahlungsposten werden im Rahmen der materiellen Disposition auf Sperren und Limite geprüft. Ein Regelwerk (Posting Control Rules) steuert flexibel die Reaktion des Systems anhand vorgegebener Parameter. So kann z.B. kundengruppenspezifisch bestimmt werden, ob ein Umsatz nachdisponiert oder direkt abgewiesen werden soll.

Systemreaktionen sind:

Buchen, Nachdisponieren, Nachbearbeitung, Rückgabe, Abweisen, CpD-Buchung.

Der Einzelumsatz ist auch Basis für die Hauptbuchübergabe. Ferner dienen die Daten der Kontoauszugserstellung. Die Umsatzfortschreibung ist währungsrein und ohne Bewertungen.

Aufträge beschreiben die Aktionen, die das Account Management sofort oder zukünftig ausführen soll. Das heißt, Aufträge können in einer Termindatei überwacht werden. Diese Aufträge können ein oder mehrere Objekte verändern.

Das Account Management verarbeitet Aufträge. Beispiele sind "Vertragsauflösung" und "Sperren setzen". Initiiert werden diese Aufträge von außen über Schnittstellen oder intern durch die Applikation selbst (z.B. Terminüberwachung für Erneuerungskarte).

Als Zusatzfunktionen sind außerdem zentrale Anwendungen, wie die *Dauerauftrags- und Zahlungsauftragsverwaltung,* vorgesehen (vgl. voranstehende Ausführungen).

Die Kartenlösung nutzt dieselben Komponenten Produktkonfigurator, Vertrag und Finanzkonditionen wie das Account Management. Somit handelt es sich bei der Administration von Karten um eine Spezialisierung des allgemeinen Vertrages. Die Integration der Kartenverwaltung in das Account Management ist notwendig, da es enge Verknüpfungen zwischen Karten und Konten gibt (z.B. EC-Karte, Debit-Card). Insbesondere will sich SAP die Option offen halten, mittelfristig Kreditkartenkonten auch umsatzseitig abzuwickeln.

Die Kartenadministration muß eine Lösung darstellen, die vom Kunden optional eingesetzt werden kann, d.h. die Kartenverwaltung muß innerhalb des Account Managements abschaltbar sein. Ferner sollte die Kartenverwaltung mittelfristig so weit ausbaufähig sein, daß sie als Einzellösung eingesetzt werden kann, wenn entsprechender Bedarf am Markt entsteht. Nach heutigen Erfahrungen besteht Bedarf an einem Account Managementsystem inklusive als auch exklusive einer Kartenadministration. Anfragen für eine alleinige Kartenadministration liegen noch nicht vor.

Das Account Management verfügt über eine zentrale Abschlußverwaltung für periodische Arbeiten (bspw. Tagesendverarbeitung). Die Bank erhält bei der Einplanung der Jobs größtmögliche Flexibilität. Unter periodischen Arbeiten sind die Funktionen zusammengefaßt, die zu einem bestimmten Termin wiederkehrend ausgeführt werden müssen. Dazu gehören die Abschlußarbeiten Cash Concentration, Kontenabschluß, Zinskompensation, Kontoauszug, die Abarbeitung von Aufträgen, der Tagesabschluß einschließlich der Fortschreibung der Bücher und Reporting. Bevor die Abschlußarbeiten durchgeführt werden, wird der Buchungsschnitt vorgenommen. Danach erfolgen alle Buchungen mit dem folgenden Tagesdatum. Externe Systeme zur Jobsteuerung können ebenfalls eingebunden werden.

Der Posting Lock Manager (Sperrverwaltung) ist zuständig für temporäre Buchungssperren, d.h. er setzt Sperren, die durch Geschäftsvorfälle (Posting Lock Events) ausgelöst werden, und hebt diese nach Ablauf des zugrundeliegenden Events wieder auf. Sperren, die a priori am Produkt definiert werden, sind nicht Teil dieser Komponente.

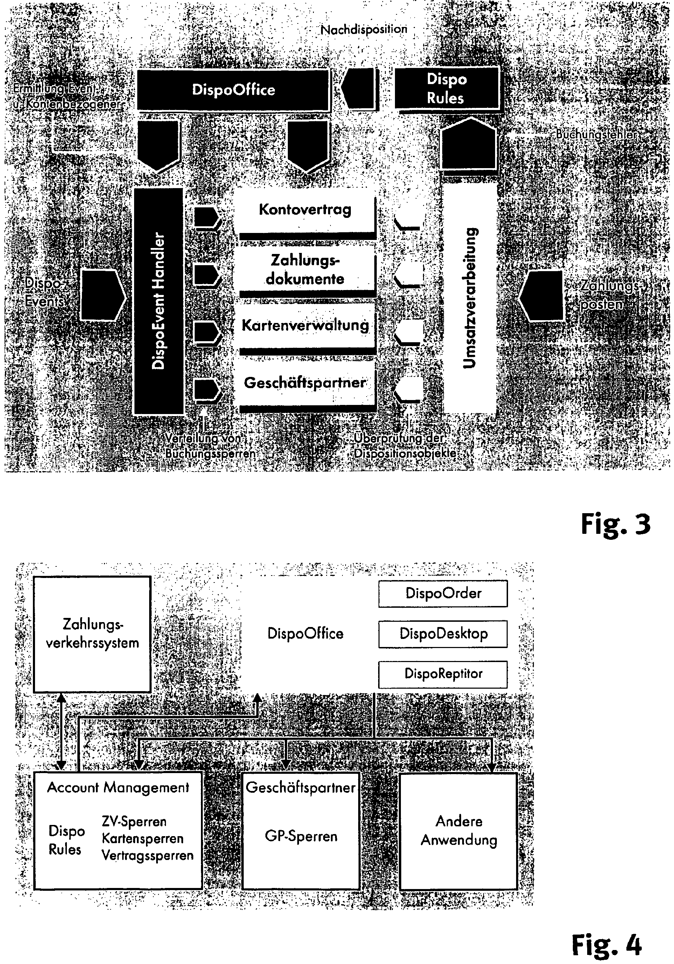

Figur 3 zeigt ein Blockdiagramm zur Veranschaulichung des Zusammenspiels innerhalb der Umsatzverarbeitung unter Beteiligung des sogenannten "Posting Lock Managers", und Figur 4 zeigt in schematischer Blockdarstellung die Struktur des sogenannten "Posting Control Office".

Der Posting Lock Manager nimmt von verschiedenen Eingangskanälen (Back Office, Callcenter- oder Schaltersystemen und Auskunfteien) Posting Control Locks entgegen und bestimmt - gemäß seinen Regeln - die Reaktion des Systems. Die Lösung läuft im operativen Betrieb (Entgegennahme und Verarbeitung von Events) weitgehend ohne manuelle Eingriffe ab. Im Account Management sind mögliche Ausprägungen von Sperrvorgängen die Vertragssperre (der Vertrag insgesamt sowie die Sperrung von Teilfunktionalitäten), die Sperre von Karten im Bestand sowie von Schecks und anderen Zahlungsverkehrsvordrucken. Am Geschäftspartner kann die zentrale Geschäftspartnersperre, die sich über alle Konten des Kunden erstreckt, gesetzt werden.

Meldet beispielsweise ein Geschäftspartner Vergleich an, so verteilt der Posting Lock Manager entsprechende Sperren. So kann diese Regel z.B. zu einer Überziehungs- und Lastschriftensperre auf allen Konten und einer Sperre aller Karten des betroffenen Geschäftspartners führen. Dieses Regelwerk ist kundenspezifisch erweiterbar.

Bedingt durch die Primäraufgabe des Account Management, den juristischen Bestand zu führen, steht ein flexibles Reporting zur Verfügung. Dazu zählen zahlreiche Listen, wie z.B. Überziehungs-, Salden- und Umsatzlisten. Ebenso ist es möglich, Listen für Konto- und Schecksperren zu erstellen und Abstimmsaldenlisten zum Abgleich der Zahlungsverkehrssalden zu erzeugen.

Die Definition von weiteren Reports ist flexibel möglich.

Zubehör-Applikationen zum Account Management aus Sicht der Applikationslandschaft sind:
- Posting Control Office
- Dynamische Limitermittlung
- Mahnen/Verzugszins

Wie einleitend bereits erwähnt, ergänzen bzw. unterstützen Zubehör-Applikationen die Funktion bzw. Aufgabe einer oder mehrerer Kernapplikationen.

Das Posting Control Office ist eine Zusatzapplikation zum Account Management, die der Disposition von Zahlungsposten dient, bei denen beim Buchungsversuch eine Sperre oder eine ungenehmigte Überziehung festgestellt wurde. Zahlungsposten, die im Account Management auf Buchungshindernisse (Sperren) und Konten treffen, bei denen es zu einer ungenehmigten Überziehung kommt, werden gemäß einem Regelwerk (Posting Control Rules) disponiert. Dieses kundenspezifisch einstellbare Regelwerk wird im Account Management verwaltet. Gegebenenfalls werden Informationen zu Zahlungsposten, die als Reaktion auf die Posting Control Rules nicht explizit abgewiesen werden, mittels eines Dispositionsauftrags (Posting Control Order) an das Posting Control Office ausgesteuert, wo ihre weitere Bearbeitung (Disposition) entweder maschinell oder manuell erfolgt. Die maschinelle Disposition (Repetitor) umfaßt die automatische Wiedervorlage von Zahlungsposten zur Buchung an das Account Management. Zahlungsposten, für die nur temporäre Buchungshindernisse (z.B. Limitprobleme) vorliegen, können mit Hilfe des Repetitors ohne manuelle Eingriffe disponiert werden.

Dauer und Häufigkeit der Wiedervorlage sowie die Endreaktion (z.B. Abweisen) bei nicht beseitigten oder neu auftretenden Buchungshindernissen sind einstellbar.

Die manuelle Bearbeitung von zu disponierenden Zahlungsposten erfolgt am Posting Control Desktop. In dieser Teillösung ist die rollenbasierte Ausgestaltung und Usability von zentraler Bedeutung. Der Disponent wird durch den Zugriff auf dispositionsrelevante Daten in seiner Entscheidung unterstützt, Zahlungsposten entweder abschließend zu bearbeiten (Aktionen u.a. buchen, abweisen etc.) oder an die maschinelle Disposition zu übergeben.

Die dynamische Limitermittlung ist eine Lösung, die insbesondere im automatisierten Massengeschäft erforderlich ist. Es handelt sich hierbei um eine Zubehörapplikation zum Account Management, die es der einzelnen Bank ermöglicht, automatisch aufgrund von definierten Regeln und Inputparametern Limite beim Kunden zu setzen.

Die dynamische Limitermittlung wird vom Kunden bzw. in Kundenprojekten nach individuellem Bedarf ausprogrammiert. Die Limitermittlung kommuniziert mit der Bestandsführung, dem Geschäftspartner sowie dem operativen CRM.

Diese Zubehörapplikation ist zuständig für außergerichtliche Mahnprozesse.

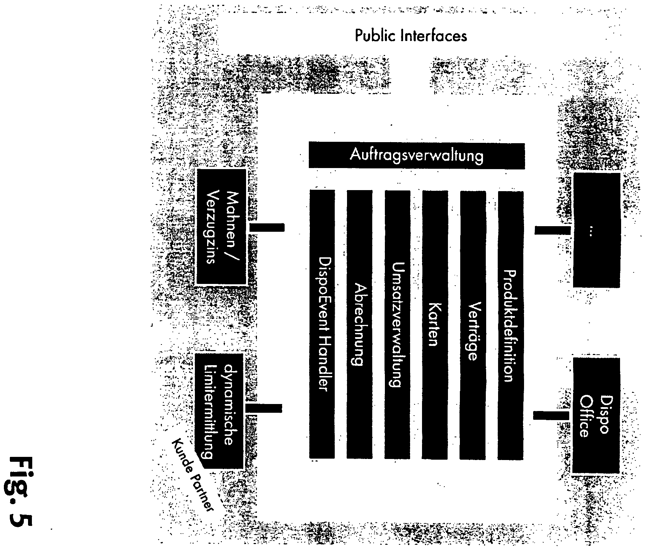

Figur 5 zeigt zusammenfassend im Überblick anhand einer schematischen Blockdarstellung die Struktur der Kernapplikation Account Management.

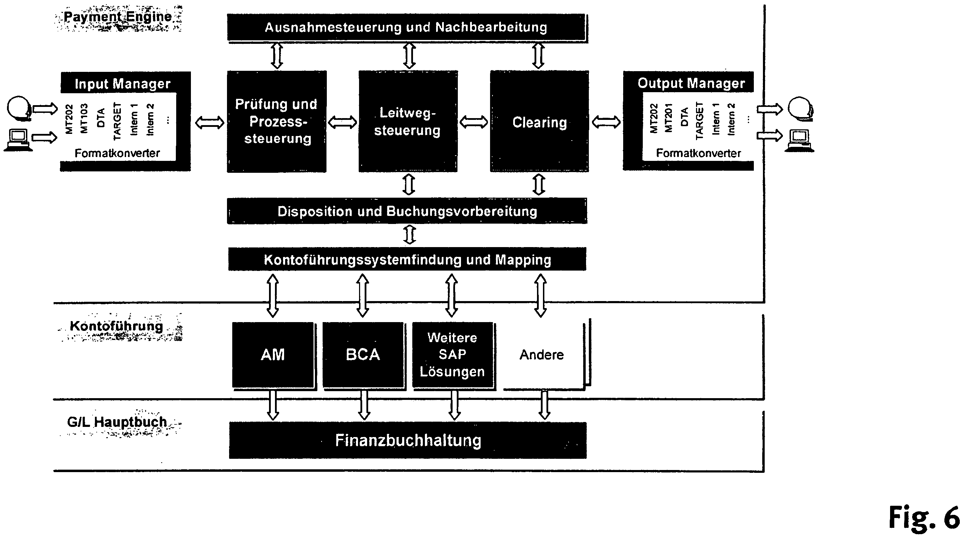

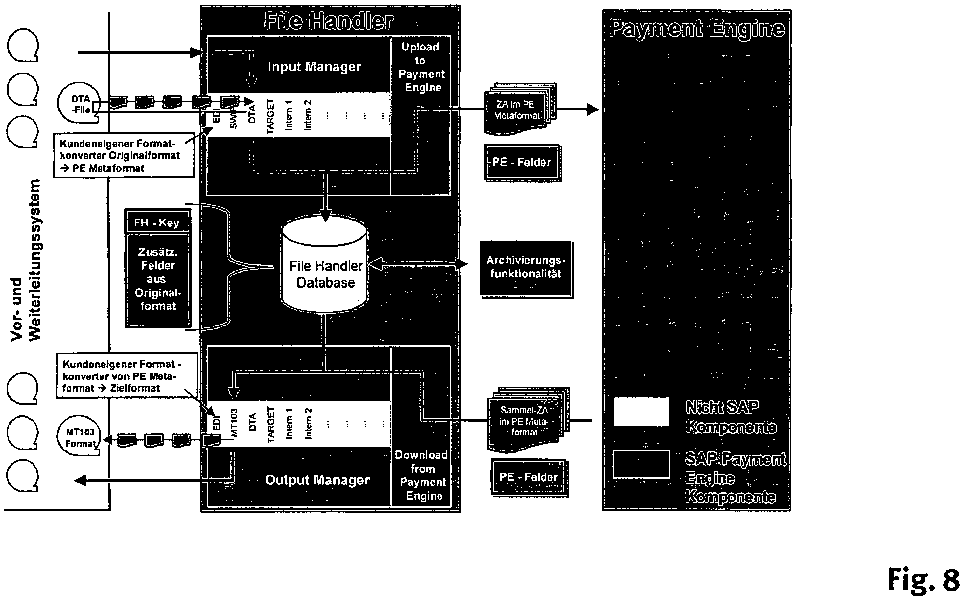

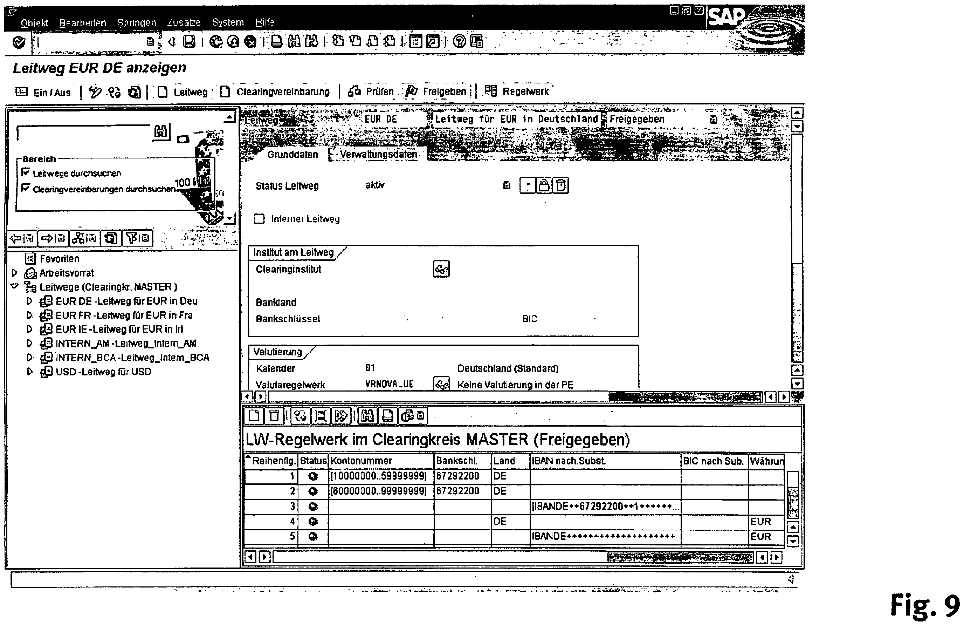

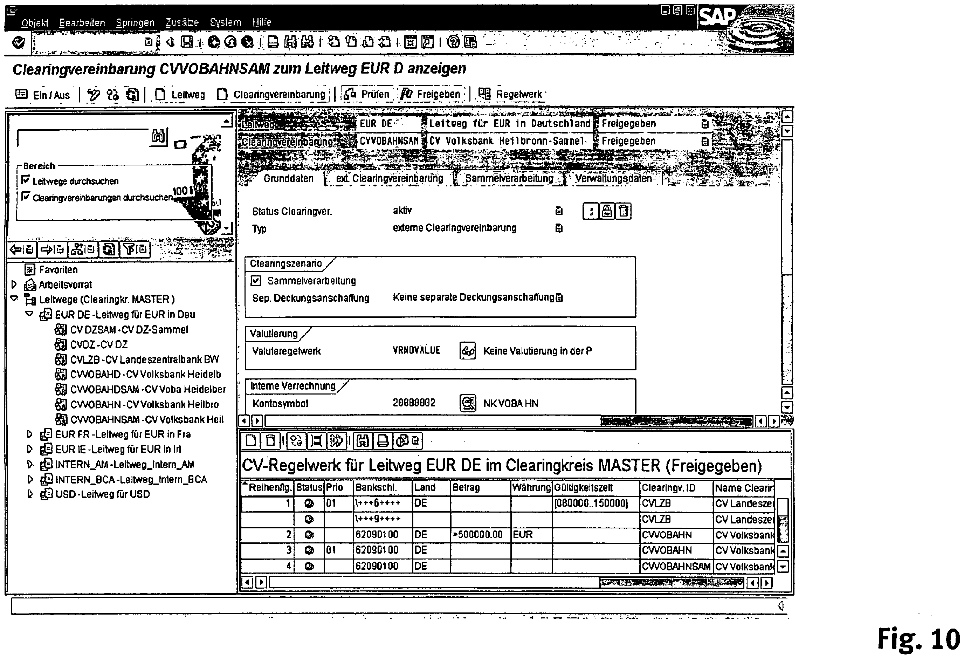

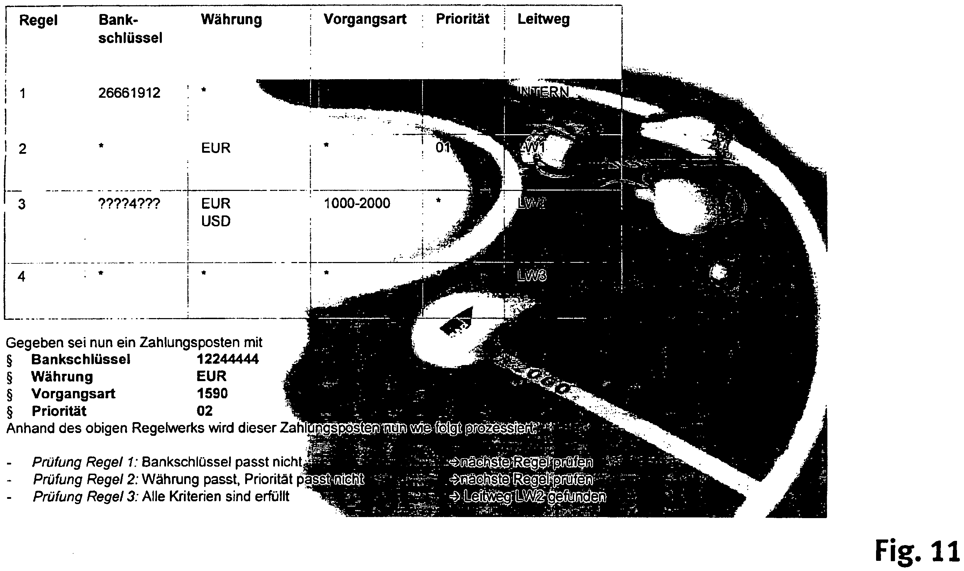

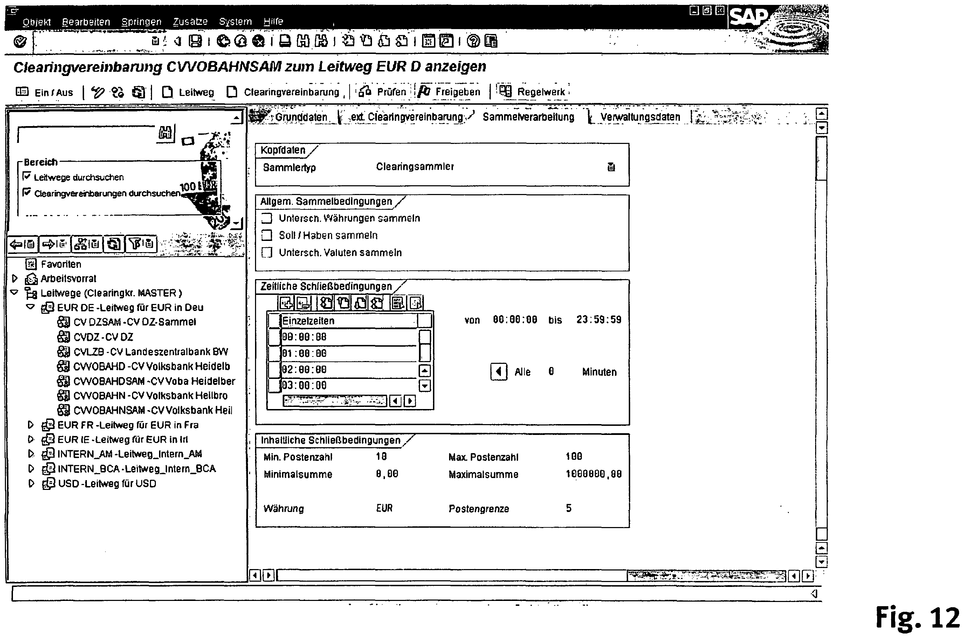

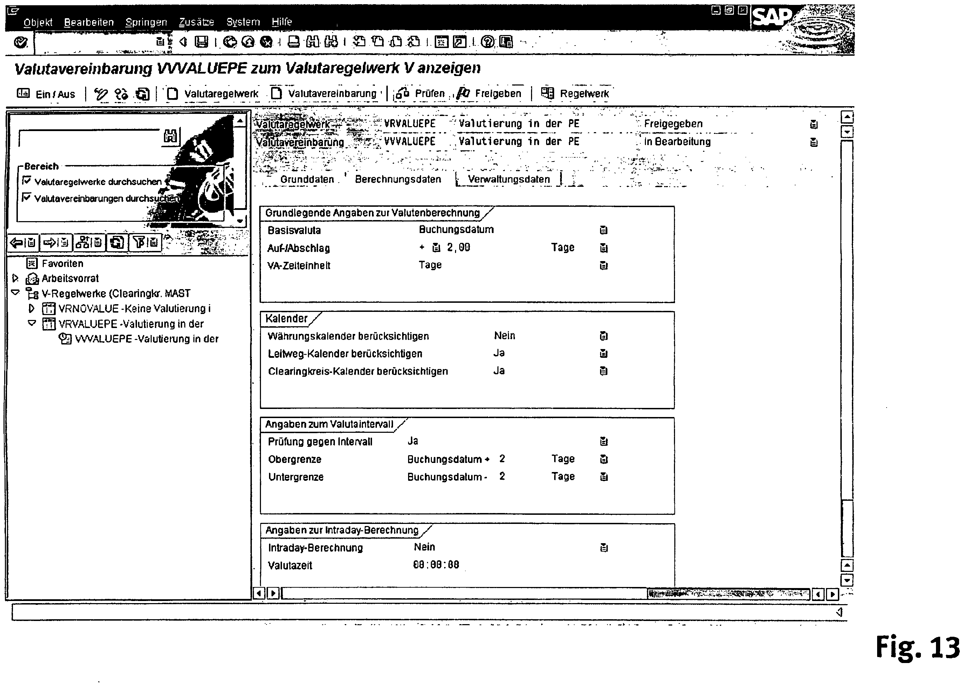

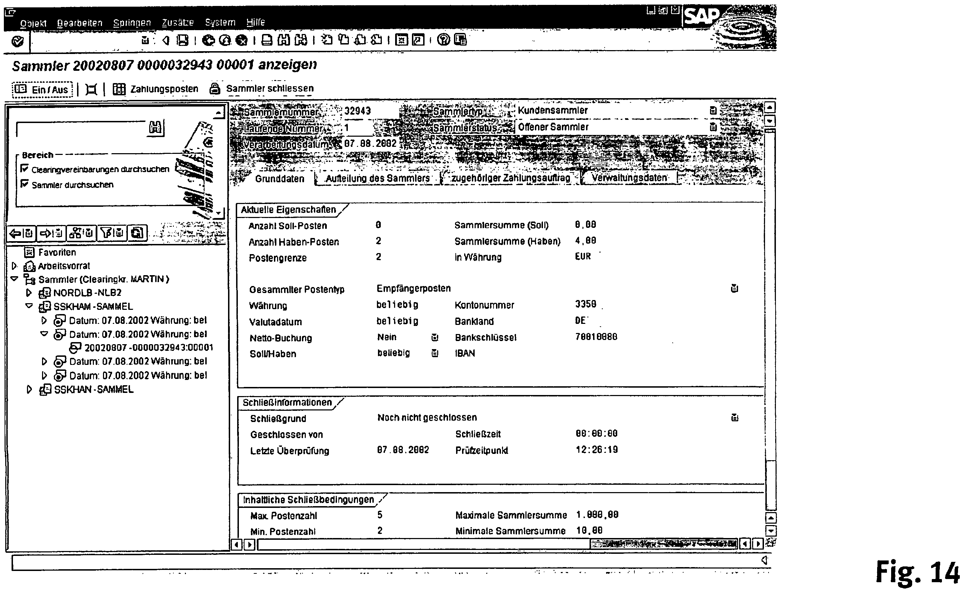

Unter Bezugnahme auf die Figuren 6 bis 16 wird nun die Erfindung detaillierter beschrieben.

Im Rahmen eines sich im Wandel befindlichen Zahlungsverkehrs müssen Banken und Finanzdienstleister ihre Strategien und Konzepte überdenken. Vor dem generellen Hintergrund eines zunehmenden Wettbewerbs, einer Globalisierung der Märkte verbunden mit der Nutzung der Kostensenkungspotentiale muß die Zielsetzung sein, eine effiziente und kostensparende Infrastruktur für den Massenzahlungsverkehr zu realisieren, wobei der STP (Straight-Through-Processing)-Fähigkeit einen großen Stellenwert einzuräumen ist.

Gemessen an den heutigen Anforderungen erweisen sich die historisch gewachsenen Zahlungsverkehrssysteme der Banken als zu unflexibel, da sie nur mit unverhältnismäßig großem Aufwand gewartet und erweitert werden können.

Die vorliegende Erfindung trägt zur Optimierung des Zahlungsverkehrs innerhalb von Banken und Finanzdienstleistern bei.

Als Bestandteil von SAP Core Banking steuert die erfindungsgemäße Payment Engine die operative Echtzeit-Abwicklung von Zahlungsaufträgen. Als eigenständige Zahlungsverkehrskomponente für die Massendatenabwicklung bildet sie die zentrale Komponente zwischen externen Clearing- und internen Kontoführungssystemen. Die Payment Engine erweitert somit SAP Core Banking zu einer integrierten, leistungsfähigen Gesamtlösung.

Die beiden SAP-Kontoführungssysteme mySAP Banking Account Management (FS-AM) und mySAP Banking Bank Customer Account (FS-BCA) sind direkt angebunden. Die offene Systemarchitektur der Payment Engine ermöglicht jedoch auch, andere Kontoführungssysteme anzuschließen. Es ist vorgesehen, weitere Integrationsszenarien in Abhängigkeit von den Anforderungen der Systemnutzer und entsprechend deren Prioritäten zu realisieren. Die Payment Engine stellt Funktionalitäten zur Kontoführungssystemfindung und der Verteilung von Zahlungsposten zwischen verschiedenen Systemen zur Verfügung.

Vor dem Hintergrund der Verordnung über grenzüberschreitende Zahlungen in EURO der EU-Kommission bzw. der Nutzung von Kostensenkungspotentialen unterstützt die Payment Engine die Einhaltung der STP-Kriterien (wie z.B. Anwendung von IBAN und BIC).

Die Payment Engine zeichnet sich durch eine generische Architektur mit dem Ziel der autarken Verwendbarkeit der Payment Engine im Zahlungsverkehr von Banken, In-House Cash Zentren und Unternehmen aus. Kundenindividuelle Ergänzungen können auf Basis von BTEs (Business Transaction Events) bzw. BADIs (Business Add-Ins) realisiert werden. Sie bietet wohldefinierte Schnittstellen zu vor- und nachgelagerten Systemen unter Nutzung von Standardtechnologien wie BAPIs (Business Application Programming Interfaces).

Im Auslandszahlungsverkehr gibt es Anforderungen an das Meldewesen. Die Anforderungen an die Meldewesenfunktionalität sind länderspezifisch und somit nicht in der Payment Engine vorgesehen. Es wird daher angenommen, daß ein Kunde eine eigene Meldewesenkomponente im Einsatz hat. Die Payment Engine kann eine Schnittstelle zur Integration der Meldewesendaten zur Verfügung stellen. Vorausgesetzt wird, daß der eingehende Zahlungsauftrag, die relevanten Meldewesendaten enthält.

Im Bankenbereich gibt es unterschiedliche Anforderungen an das Liquiditätsmanagement. Das kundeneigene Liquiditätsmanagementsystem zur Liquiditätssteuerung kann über eine Schnittstelle mit den buchungsrelevanten Informationen aus der Payment Engine versorgt werden.

Die Bearbeitung des eingehenden Kontoauszugs und die Abstimmung von Nostrokonten wird nicht innerhalb der Payment Engine geleistet. Das kundeneigene Nostroabstimmungssystem kann über eine Schnittstelle mit den buchungsrelevanten Informationen versorgt werden.

Herkömmlicherweise werden Zahlungsein- und -ausgänge in Unternehmen per sogenannten Batches ausgeführt. Erfindungsgemäß wird eine Zahlungsabwicklungseinrichtung oder Zahlungsmaschine (Payment Engine) bereitgestellt, die automatisch das Zahlungsziel (im Sinne des Zielkontos und des Überweisungsweges) erkennt.

Die Payment Engine ermöglicht es, sowohl Batches als auch Online-Verfahren, insbesondere durch eine Unterstützung der Durchbuchung (Straght-Through-Processing), zu verknüpfen.

Empfängt eine Bank einen Zahlungseingang, dann ermittelt die Payment Engine das Zielkonto, d.h. ob sich das Konto in der eigenen Bank oder außerhalb befindet.

Konventionell wird bei Zielkonten zwischen dem In- und Ausland unterschieden und es wird zwischen unterschiedlichen Netzen für Bankenadressierung unterschieden, was zu einem starren und unflexiblen System führt. Die Erfindung stellt dahingegen eine Steuerungseinheit bereit, mit der eine Reduzierung an Hardware und Bearbeitungsaufwand durch Bedienpersonen verbunden ist.

In der Systemlandschaft werden Clearing-Kreise als weitere Einstellungen für Mandanten/Kunden geführt. Zu jedem Clearing-Kreis kann es eine oder mehrere kontoführende Einheiten geben, und es ist eine Anbindung an ein logisches Kontoführungssystem (einer kontoführenden Einheit) möglich. Unter Clearing wird die Verrechnung und der Austausch von Zahlungsaufträgen zwischen Kreditinstituten verstanden. Die Clearingszenarien beschreiben die Aspekte, wie Zahlungsaufträge ausgetauscht werden und der Gegenwert verrechnet wird. Die Kontoführungssystemfindung hat Angaben zum Ziel, diese Regeln können kombiniert werden mittels logischer Verknüpfungen beispielsweise für Ausnahmen. Es erfolgt dann eine Postenweitergabe an die Kontoführung, das aufnehmende System bearbeitet die Buchung vollständig. Die Payment Engine stellt somit eine reine Prozeßsteuerung ohne Buchhaltungswissen dar, was zu einer geringeren Datenredundanz führt. Sie stellt außerdem eine zentrale Währungsumrechnung bereit.

Nicht-prozeßrelevante Daten werden im Input-Manager vorher abgespalten und erhalten eine Referenznummer. Hinterher werden sie im Output-Manager wieder hinzugefügt. Eine Nachforschungserleichterung erfolgt durch Pointerhinterlegung in der Payment Engine. Erfindungsgemäß ist das Buchungsdatum entkoppelt von dem Prozessierungsdatum. Eine Leitwegbeeinflussung kann interaktiv durch den sogenannten Cash-Manager erfolgen. Ein Verfahrenslimit (Lastschriftlimit, Verfügungslimit, Kassenverfügungslimit), beispielsweise pro Zeitlimit, kann im Buchungssystem kreiert und eingestellt werden und von der Payment Enginge genutzt werden. Verfahrenslimite können gegeneinander kumuliert werden.

Ein großer Zahlungsauftrag (Sammelauftrag) kann aufgespalten werden und läuft offiziell über eine Hauptbank. Die aus der Aufspaltung resultierenden Einzelaufträge können dann direkt weitergegeben werden. Dies kann auch benutzt werden, um Vorgänge, die nicht direkt akzeptiert werden (wie dies beispielsweise bei Lastschriften der Fall ist) abzuwickeln.

Die Payment Engine Architektur setzt sich erfindungsgemäß aus folgenden drei Komponenten zusammen:
□ Payment Processing
□ Route Processing
□ Clearing Processing

Zusätzlich ist als Input- bzw. Output-Komponente zur Payment Engine ein File Handler (Auftragsbearbeiter) vorgesehen. Der File Handler setzt sich aus
□ Input-Manager (Eingangsbearbeiter)
□ Output-Manager (Ausgangsbearbeiter)

### zusammen .

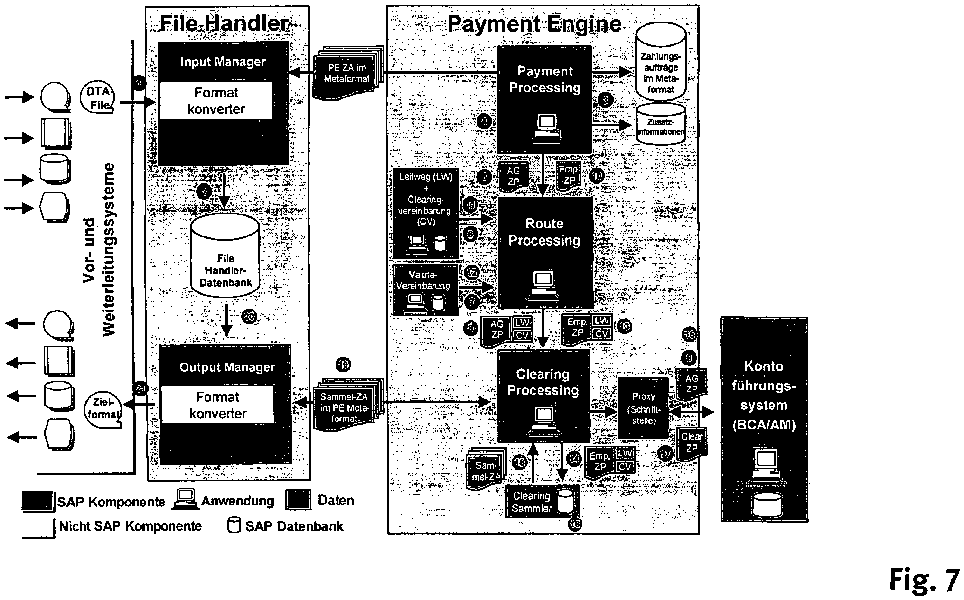

Prozeßbeschreibung (vgl. Figur 7):
1. Das Vorsystem (z.B. Dateiverwaltung) empfängt einen neuen Auftrag als File (im Ausführungsbeispiel der Figur 7 das DTA-Format) und ruft den Input Manager - mit Informationen über diesen File (Kanal, Medium, Format und Pfad) - auf. Anhand des Kanals, des Mediums und des Formats erkennt der Input Manager den richtigen kundeneigenen Formatkonverter. Der Formatkonverter liest die Datei und mappt das Eingangsformat auf das Payment Engine Metaformat. Zusätzlich werden im Formatkonverter alle formatabhängigen Prüfungen und notwendigen Ableitungen durchgeführt.
2. Nach der Prüfung und dem Mapping im kundeneigenen Formatkonverter übernimmt der Input Manager die Daten. Alle Felder des Originalzahlungsauftrags bzw. - zahlungspostens, die nicht für die Verarbeitung in der Payment Engine benötigt werden, können in der File Handler-Datenbank abgelegt werden. Somit stehen alle Originaldaten wieder dem Output Manager zur Verfügung falls Zahlungsposten des eingehenden Zahlungsauftrags nach der Verarbeitung in einen ausgehenden Zahlungsauftrag eingestellt werden.
3. Der Input Manager übergibt die Zahlungsauftragsdaten im PE Metaformat zum Speichern an die Komponente Payment Processing. Das Metaformat enthält Zahlungsaufträge einschl. Zahlungsposten sowie Verwendungszweckdaten, Meldewesendaten und kundenspezifische (zusätzliche) Gebühreninformationen.
4. Im Payment Processing wird der Zahlungsauftrag inklusive aller Zahlungsposten formal geprüft.
5. Der Auftraggeberposten wird als erstes von der Komponente Payment Processing an die Komponente Route Processing zur Leitweg- und Clearingvereinbarungsfindung übergeben.
6. Im Route Processing wird der Leitweg (LW) und die zugehörige Clearingvereinbarung (CV) ermittelt.
7. Weiterhin wird für den Auftraggeberposten im Route Processing die Valutavereinbarung ermittelt.
8. Der mit dem Leitweg (LW) und der Clearingvereinbarung (CV) angereicherte Auftraggeberposten wird an die Komponente Clearing Processing übergeben. Im Clearing Processing wird anhand des Leitweges und der Clearingvereinbarungsinformationen entschieden wie der Auftraggeberposten weiterzubearbeiten ist.
   Anhand des Leitweges und der zugehörigen Clearingvereinbarung wird festgestellt, daß der Auftraggeberposten institutsintern in das Kontoführungssystem gebucht werden soll. (Anmerkung: Hinsichtlich des Auftraggeberpostens ist zu beachten, daß dieser immer zwingend intern ist).
9. Über ein Proxy wird der Auftraggeberposten an das Kontoführungssystem zur Disposition und Reservierung oder Buchung weitergeleitet. Ob eine Disposition und Reservierung oder eine Buchung durchgeführt wird, hängt von der angebotenen Funktionalität im Kontoführungssystem ab. Vom Kontoführungssystem kommt eine entsprechende Rückmeldung, ob der Auftraggeberposten erfolgreich gebucht werden konnte.
10. Nach erfolgreicher Disposition/Reservierung oder Buchung des Auftraggeberpostens werden die einzelnen Empfängerposten an die Komponente "Route Processing" übergeben.
11. Im Route Processing wird der Leitweg (LW) und die zugehörige Clearingvereinbarung (CV) ermittelt.
12. Weiterhin wird im Route Processing für den Empfängerposten die Valutavereinbarung ermittelt.
13. Der mit dem Leitweg (LW) und der Clearingvereinbarung (CV) angereicherte Empfängerposten wird an die Komponente Clearing Processing übergeben. Im Clearing Processing wird anhand des Leitwegs (LW) und der Clearingvereinbarungsinformationen (CV) entschieden, wie der Empfängerposten weiterzubearbeiten ist.
14. Anhand des Leitweges und der Clearingvereinbarung wird in diesem Beispiel festgestellt, daß der Empfängerposten institutsextern ist und in einen Clearingsammler gestellt werden soll. Der Empfängerposten wird daher in einen offenen Clearingsammler eingestellt.

*Die Schritte 10 bis 14 wiederholen sich für jeden Empfängerposten.*
15. Die in Schritt 9 eventuell angelegte Reservierung der Auftraggeberposten in der Kontoführung wird nach erfolgreicher Abarbeitung aller Empfängerposten durch eine Buchung abgelöst. Damit ist der eingehende Zahlungsauftrag in der Payment Engine abgearbeitet.
16. In der Clearingvereinbarung sind die Schließkriterien für den Clearingsammler (z.B. Anzahl der Posten und Summe der Posten) registriert. Sie werden ständig durch einen vom primären Verarbeitungsprozeß losgelösten eigenständigen Prozeß überprüft und aktualisiert. Zusätzlich wird überprüft, ob der Sammler aufgrund Erreichen einer vorgegebenen Uhrzeit geschlossen werden muß. Der Clearingsammler wird mit Eintritt eines Schließkriteriums geschlossen.
17. Beim Schließen des Clearingsammlers wird ein Clearingposten (Sammlersumme) erstellt und dieser wird dem weitergeleiteten Sammelzahlungsauftrag zugeordnet. Der Clearingposten wird über eine Schnittstelle an das jeweilige Kontoführungssystem übergeben. Es erfolgt eine sofortige Rückmeldung des Kontoführungssystems (z.B. gebucht, nicht gebucht, abgelehnt).
18. Danach wird ein Sammelzahlungsauftrag mit allen Zahlungsposten des Clearingsammlers als Empfängerposten sowie ein neuer Auftraggeberposten erstellt. Der ausgehende Sammelzahlungsauftrag wird vom Clearing Processing an den Output Manager weitergeleitet.
19. Es werden die Informationen des ausgehenden Sammelzahlungsauftrags im Payment Engine Metaformat an den Output Manager übergeben. Der Output Manager liest bei großen Zahlungsaufträge paketweise den im Metaformat übergebenen Sammelzahlungsauftrag und gibt nach dem letzten Paket eine Statusmeldung zurück ("Ausgehende Zahlungsaufträge angenommen").
20. Anhand von Kanal, Medium und Zielformat erkennt der File Handler den richtigen kundeneigenen Formatkonverter. Der Formatkonverter mappt das ausgehende Metaformat auf Zielformat. Alle Felder bzw. Informationen vom Originalzahlungsauftrag stehen prinzipiell beim Mapping zur Verfügung (werden teilweise von File Handler aus der File Handler-Datenbank gelesen bzw. aus dem ausgehenden Zahlungsauftrag in Metaformat abgeleitet und dem Formatkonverter zur Verfügung gestellt; siehe Punkt 2). Zusätzlich werden im Formatkonverter evt. formatabhängige Prüfungen am ausgehenden Zahlungsauftrag durchgeführt.
21. Der kundeneigene Formatkonverter übergibt den erstellten Zahlungsauftrag im Zielformat an die entsprechenden Weiterleitungssysteme.

### File Handler - Input Manager

Da es im weltweiten Zahlungsverkehr sehr viele unterschiedliche, zum Teil länderabhängige, Formate gibt, wird im Input Manager ein kundeneigener Formatkonverter angefordert. Der formatabhängige Teil gehört nicht zum SAP-Standard und dessen Realisierung bzw. Verantwortung liegt beim jeweiligen Kunden oder SAP-Implementierungspartner. Dies soll die Formatunabhängigkeit der Payment Engine sicherstellen. Darüber hinaus ist durch dieses Vorgehen sichergestellt, daß kundeneigene bzw. interne Zahlungsauftragsformate implementieren werden können.

Es wird jedoch ein Standardrahmen zur Verfügung gestellt, in den der Kunde im Rahmen eines Einführungsprojekts seine jeweiligen Formatkonvertierungsroutinen einbauen kann. Der formatunabhängige Teil gehört zum SAP-Standard und umfaßt das Datenbankhandling als auch die Übergabe der Daten an die Payment Engine.

Im File Handler wird durch die Parameter Kanal, Medium und Format der kundeneigene formatabhängige Teil, einschließlich Formatkonverter, identifiziert. Im Fall des **Input Managers** liest der kundeneigene Formatkonverter die externen Daten, konvertiert diese in das Payment Engine Metaformat und übergibt die Daten dann an den formatunabhängigen Teil des Input Managers, welcher für die weitere Verarbeitung sorgt. Diese weitere Verarbeitung umfaßt die Ablage von Daten, welche nicht direkt im Metaformat gespeichert werden können, in der File Handler-Datenbank und die Übergabe der Daten im Metaformat an die Payment Engine selbst. Dies bedeutet: Alle Felder des Originalzahlungsauftrags bzw. - zahlungspostens, die nicht für die Verarbeitung in der Payment Engine benötigt werden, können in der File Handler-Datenbank abgelegt werden. Der Input Manager übergibt den Zahlungsauftrag und die zugehörigen Zahlungsposten an die Payment Engine.

### Payment Processing

Das **Payment Processing** übernimmt generell die Verwaltung von Zahlungsaufträgen und Zahlungsposten einschließlich der notwendigen Statusverwaltung. Der Input Manager zerlegt die Informationen eines eingehenden Zahlungsauftrags in die Bestandteile des Metaformats:
□ Daten für das weitere Processing (eigentlicher Zahlungsauftrag einschl. Zahlungsposten)
□ Zusatzinformationen:
   o Verwendungszweckdaten
   o Meldeweseninformationen
   o Kundenspezifische (zusätzliche) Gebühreninformationen:
      Falls der Kunde ein eigenes Gebührenermittlungs- bzw. Verwaltungssystem im Einsatz hat, besteht die Möglichkeit diese Gebühreninformationen am Zahlungsposten abzulegen, um sie für spätere Auswertungszwecke zu nutzen.

Nur der eigentliche Zahlungsauftrag wird in der Verarbeitung im Payment Processing verwendet. Die Zusatzinformationen werden in einer Datenbank abgelegt und im Zahlungsauftrag bzw. Zahlungsposten wird darauf referenziert.

Weiterhin werden hier die entsprechenden formalen Prüfungen für Zahlungsauftrag und Zahlungsposten durchgeführt. Darüber hinaus wird die Konsistenz aller Zahlungsposten eines Zahlungsauftrages sichergestellt. An dieser Stelle sei beispielhaft auf die Prüfung der Soll-/Habengleichheit verwiesen. Ist der Auftraggeberposten formal falsch, werden die Empfängerposten nicht weiter verarbeitet und der gesamte Zahlungsauftrag wird in die Nachbearbeitung gegeben. Weiterhin kann der Kunde weitere Prüfobjekte definieren und implementieren, die in die formalen Prüfungen des Auftraggeberpostens integriert werden können. Alle materiellen Prüfungen (wie z.B. Prüfung des Kontolimits oder Prüfung der Zulässigkeit einer Vorgangsart) finden im jeweiligen Kontoführungssystem statt und hängen somit von der hier angeboten Funktionalität ab.

### Route Processing

Im **Route Processing** werden pro Zahlungsposten ein
■ *Leitweg* und
■ eine zugehörige *Clearingvereinbarung* ermittelt.

Über ein Regelwerk wird in einem ersten Schritt ein eindeutiger Leitweg für jeden Zahlungsposten ermittelt. Für das Regelwerk (zur Ermittlung des Leitwegs) steht eine flexible Auswahl von Attributen zur Verfügung. Technisch können alle Felder des Zahlungsauftrages bzw. des Zahlungspostens aus der Metaformatdefinition als Attribute herangezogen werden. Darüber hinaus werden Merkmale bereitgestellt, mit denen die Gültigkeit einer Regel zeitlich eingeschränkt werden kann (z.B. Datum, Uhrzeit, Wochentag, Monatsprimo/-ultimo). Der Kunde hat ebenfalls die Möglichkeit, kundeneigene Felder zu integrieren.

In der Clearingvereinbarung werden die Bedingungen für die Weiterleitung von Zahlungsaufträgen zwischen den Finanzinstituten hinterlegt. So wird hier unter anderem festgelegt:
■ ob Zahlungsposten einzeln oder gesammelt weitergegeben werden,
■ wie die Zahlungsinformationen ausgetauscht werden (direkt oder indirekt)
■ wie die Anschaffung des Gegenwerts erfolgt,
■ auf welchem Konto die Verrechnung erfolgt.

Die Regeln zur Findung der Clearingvereinbarung können analog zur Leitwegermittlung flexibel ausgesteuert werden. Leitweg und Clearingvereinbarung hängen so voneinander ab, daß zunächst der Leitweg bestimmt und anschließend die Clearingvereinbarung gefunden wird.

Darüber hinaus stellt die Payment Engine Funktionalitäten zur Valutenfindung zur Verfügung. Ziel der Valutenfindung ist es, denjenigen Zahlungsposten, für die dies erwünscht ist, Valuten zuzuordnen. Dabei kann die Valutierung von verschiedenen Parametern wie z.B. Vorgangsart, dem Betrag und der Währung abhängen. Das tatsächliche Vorgehen zur Berechnung einer Valuta für einen Zahlungsposten ist in sogenannten Valutavereinbarungen festgelegt. Die Valutavereinbarung enthält unter anderem folgende Informationen:
■ Valutierungsnotwendigkeit
■ Festvaluta-Akzeptanz
■ Basisvaluta, Auf-/Abschlag
■ Valutaintervall
■ Valutensplitt-Kennzeichen ...

Die Findung der Valutavereinbarung kann ebenfalls flexibel ausgesteuert werden.

Des weiteren besteht die Möglichkeit, für Auftraggeberposten einen Valutensplitt durchzuführen. Der Valutensplitt bedeutet, daß aus einem Sammelzahlungsauftrag in Abhängigkeit der Valutierung der Empfängerposten verschiedenen Auftraggeberposten erstellt werden.

### Clearing Processing

Im **Clearing Processing** werden die einzelnen Zahlungsposten weiter verarbeitet.

Gemäß der vom Route Processing mitgelieferten Informationen (Leitweg und Clearingvereinbarung) und der Ausprägungen der zu buchenden Zahlungsposten erfolgt institutsintern entweder eine Einzelbuchung in der Kontoführung (z.B. SAP Account Management) oder es wird ein Sammler erstellt. Bei Einzelbuchungen für ein externes Institut (z.B. Eilaufträge) wird der Zahlungsposten in einem neuen ausgehenden Zahlungsauftrag direkt an den Output Manager übergeben. Sollen die Zahlungsposten gemäß Clearingvereinbarung gesammelt werden, dann wird ein Clearingsammler geöffnet und die Zahlungsposten hier eingestellt.

Bei Sammlerbildung wird - wenn kein offener Sammler vorhanden ist - ein Sammler angelegt und der Zahlungsposten zunächst hier eingestellt. Bei Sammlerschließung wird aus den gesammelten Zahlungsposten im Sammler ein Sammelzahlungsauftrag (inklusive neuer Auftraggeberposten) sowie ein Clearingposten erzeugt. Zahlungsposten referenzieren auf den entsprechenden Sammler, und damit ist eine lückenlose Dokumentation gewährleistet. Sammler können automatisch (auf Basis der in den Clearingvereinbarung festgelegten Schließkriterien) oder manuell geschlossen werden. Es existieren die folgenden automatisch eintretenden Sammlerschließkriterien:
- Erreichen der vorgegebenen maximalen Sammlersumme,
- Erreichen der vorgegebenen maximalen Postenzahl,
- Erreichen einer vorgegebenen Uhrzeit in Kombination mit einer Mindestsumme und einer Mindestpostenzahl im Sammler (Bedingungen sind mit "UND" verknüpft).

Nach Sammlerschließung wird der Clearingposten (Summe aller Einzelposten) zur Buchung dem Kontoführungssystem übergeben.

Der erzeugte Sammelzahlungsauftrag wird an den Output Manager weitergegeben.

Die Weiterverarbeitung hängt wiederum vom jeweiligen Clearingszenario ab, die an späterer Stelle beschrieben werden.

### File Handler - Output Manager

Der kundeneigene Formatkonverter im Output Manager erstellt das spezifische Format des ausgehenden Zahlungsauftrags auf Basis des von der Payment Engine gelieferten ausgehenden Zahlungsauftrags sowie der zusätzlichen Originaldaten aus der File Handler-Datenbank.

Die Payment Engine kann durch eine Parallelisierung der Verarbeitung die Performanceanforderungen der großen Rechenzentren und Privatbanken abdecken.

Mit der Definition von Organisationseinheiten, beispielsweise mehrerer rechtlich selbständiger Finanzinstitute und der Möglichkeit, diese unter einer Einheit höherer Ordnung (Mandant) zusammenfassen zu können, ergibt sich die Rechenzentrumsfähigkeit der Payment Engine. Im Rechenzentrumsbetrieb erhält jedes angeschlossene Finanzinstitut ein eigenes Set von Steuerungsdaten für die individuelle Prozesssteuerung.

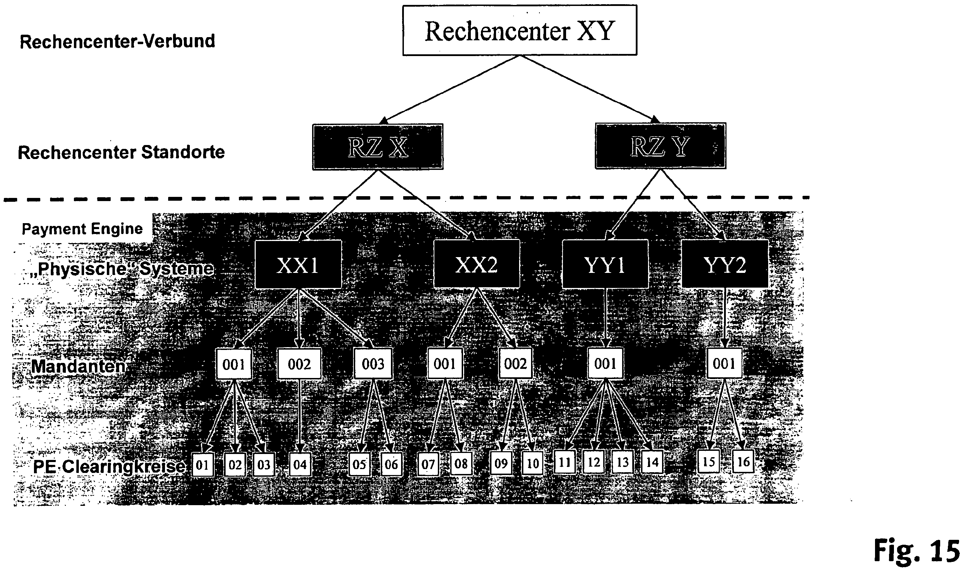

Ein Rechencenter-Verbund hat beispielsweise zwei Standorte RZ X und RZ Y (vgl. Figur 15), die wiederum jeweils zwei physische Systeme XX1, XX2 bzw. YY1, YY2 im Einsatz haben. Ein System wiederum hat mehrere Mandanten. Ein Mandant stellt eine für sich - handelsrechtlich, organisatorisch und datentechnisch - abgeschlossene Einheit innerhalb eines R/3-Systems dar. Ein oder mehrere Clearingkreise sind Unterteilungen eines Mandanten. Dabei ist zu beachten, daß die Clearingkreise im gesamten Rechencenter-Verbund eindeutig definiert werden müssen. Kreditinstitute, die die Payment Engine als Zahlungsverkehrssystem einsetzen, werden betriebswirtschaftlich als *Clearingkreise* abgebildet. Der Clearingkreis repräsentiert ein rechtlich selbständiges Institut.

Für eine einheitliche Verarbeitungslogik innerhalb der Payment Engine ist ein formatunabhängiger und damit allgemein verwendbarer Zahlungsauftrag (Payment Engine Metaformat) implementiert. Dadurch lassen sich in einer Applikation sowohl der Inlands- als auch der Auslandszahlungsverkehr durchführen.

Zahlungsaufträge können als Einzel- oder als Sammelaufträge angeliefert bzw. weitergeleitet werden. Ein Zahlungsauftrag dient der Erfassung eines Zahlungsvorgangs und umfaßt im Normalfall einen Auftraggeberposten und einen oder mehrere, Empfängerposten.

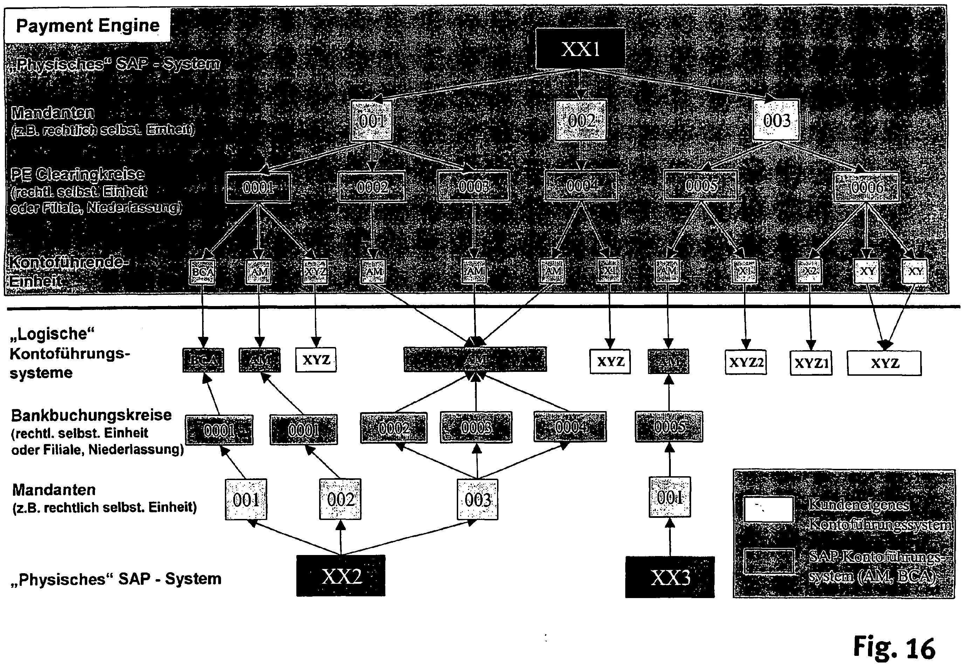

Generell bildet ein Zahlungsauftrag (vgl. Figur 16) die Klammer um Zahlungsposten. Die Posten können zu verschiedenen Zahlungspostentypen
■ Auftraggeberposten,
■ Empfängerposten,
■ Clearingposten,
■ Umsatzposten
gehören.

Das Statuskonzept erlaubt es, den aktuellen Verarbeitungsstatus eines Zahlungsauftrags in den Teilkomponenten der Payment Engine und des Kontoführungssystems jederzeit zu ermitteln und die Verarbeitungshistorie nachzuvollziehen. Somit wird eine integrierte Überwachung des gesamten Life-Cycle eines Zahlungsauftrages ermöglicht. Jede anwenderinitiierte Änderung eines Objektes, wie Zahlungsauftrag, Zahlungsposten, Leitweg, Clearingvereinbarung etc. wird in der Payment Engine revisionssicher -mittels Änderungsbelegeprotokolliert.

Anwendungsprotokolle stellen eine Monitoringfunktionalität über den Gesamtprozeßablauf in der Payment Engine zur Verfügung.

Unter Clearing wird in der Payment Engine die Verrechnung und der Austausch von Zahlungsaufträgen zwischen Kreditinstituten verstanden. Die Clearingszenarien beschreiben folgende Aspekte:
■ Wie werden Zahlungsaufträge ausgetauscht?
■ Wie wird der Gegenwert verrechnet?

Die Payment Engine deckt alle bekannten Clearingszenarien ab. Hierzu zählen das
■ direkte Clearing,
■ das Clearing mit Verrechnungsstelle und
■ das Clearing mit separater Deckungsanschaffung.

Zudem gewährleistet sie das Bündeln von Zahlungen in Form von Sammlern in Verbindung mit einer flexiblen Steuerung der Sammlerschließkriterien.

Unter direktem Clearing wird Einzelzahlungs- und Sammelzahlungsauftragstransport ohne Verrechnungsstelle verstanden, d.h. Zahlungsaufträge werden direkt getauscht und die Verrechnung erfolgt über eine direkte Kontoverbindung (Loro- /Nostrokonto).

Unter Clearing mit Verrechnungsstelle wird Einzelzahlungs- und Sammelzahlungsauftragstransport mit einer Verrechnungsstelle verstanden, d.h. die Zahlungsaufträge und die Verrechnung werden über eine Verrechnungsstelle ausgetauscht.

Unter Clearing mit separater Deckungsanschaffung schließlich wird Einzelzahlungs- und Sammelzahlungsauftragstransport mit separater Deckungsanschaffung über eine Verrechnungsstelle verstanden (sogenanntes "Garagenclearing"), d.h. Zahlungsaufträge werden direkt ausgetauscht, aber die Verrechnung erfolgt über eine Verrechnungsstelle.

### Ausnahmesteuerung und Nachbearbeitung

Der Gesamtprozess der Zahlungsauftragsabwicklung wird innerhalb der Payment Engine in eine logische Folge von Verarbeitungsschritten und Prüfungen zerlegt. Treten entlang dieses Gesamtprozesses aufgrund von Prüfungen Gründe auf, die gegen eine weitere Verarbeitung von Zahlungsaufträgen bzw. Zahlungsposten sprechen, so muß darauf adäquat reagiert werden. Hierzu stellt die Payment Engine flexible Funktionalitäten zur Ausnahmesteuerung und Nachbearbeitung zur Verfügung und ermöglicht somit eine konfigurierbare Steuerung der möglichen Reaktionen auf Fehlerfällen innerhalb der Zahlungsauftragsverarbeitung. Die Nachbearbeitung wird auf Basis des Payment Engine Metaformats erfolgen.

### Währungstausch

Der automatische Währungstausch rechnet Zahlungsposten, bei der die Transaktionswährung nicht der Kontenwährung entspricht, in Kontenwährung um. Der Betrag in Kontenwährung wird gebucht, die Transaktionswährung und der für die Umrechung zugrundeliegende Kurs wird nachrichtlich mitgeführt. Zusätzlich wird ein Währungstauschzahlungsauftrag für die korrekte Bilanzierung von Währungsbeständen erzeugt und im Kontoführungssystem gebucht.

Die Payment Engine stellt Funktionen zum Handling von Rückrufen zur Verfügung. Als Eingabemöglichkeiten für Rückrufe kommen grundsätzlich zwei Möglichkeiten in Betracht:
- Die in der Payment Engine zu suchenden Rückrufe werden zusammen mit einer Datei geliefert. Die Rückrufe werden dann gemeinsam mit den zu verarbeitenden Aufträgen der Eingangsschnittstelle übergeben.
- Es wird eine Online-Oberfläche zur Eingabe von Rückrufen innerhalb der Payment Engine zur Verfügung gestellt.

Um Daten aus der File Handler-Datenbank zusammen mit Daten aus der Payment Engine zu archivieren, ist eine entsprechende Archivierungs-Funktionalität vorgesehen.

Die Payment Engine stellt ein Clearingkonzept zur Verfügung und gewährleistet hierdurch das klassische Vier-Augen-Prinzip. Ist ein Clearing gewünscht, so muß jede Änderung (z.B. Anlage, Löschung, Datenänderung oder Aktivierung bzw. Deaktivierung von Leitwegen, Clearingvereinbarungen, Regeln und Clearinginstituten) durch einen zweiten Benutzer freigegeben werden.

Erfindungsgemäß ist eine Rechenzentrumsfähigkeit gegeben, die sich aus der Trennung vom Mandant und Clearingkreis ergibt. Je Clearingkreis können mehrere kontoführende Einheiten vorgesehen sein und somit mehrere Bankbuchungskreise (vgl. Figuren 15 und 16). Dadurch wird eine Zusammenfassung einzelner Payment Engines zu einem Rechenzentrum und eine übergeordnete Zusammenfassung einzelner Rechenzentren zu einem Rechenzentrumsverbund ermöglicht.

### Vorteile der Erfindung

- Flexible und integrierte Lösung für Inlands- und Auslandszahlungsverkehr
- Formatneutrale Verarbeitung
- Rechenzentrumsfähigkeit
- Ausnahmesteuerung und Nachbearbeitungsfunktionalität
- Hohe Performance (parallelisierbar und skalierbar)
- Kundeneigene Erweiterungen ohne Verletzung des Standards möglich
- Vorbereitung für Intraday-Verzinsung
- Offene Integrationsplattform für Zahlungen und Buchungen zwischen verschiedenen bestandsverwaltenden Systemen (SAP und nicht SAP-Systeme)
- Unterstützt das "Straight-Through-Processing" (STP)
- Hohe Integration und klare Schnittstellen, geringer Implementierungsaufwand im Core Banking
- Hoher Automatisierungsgrad bei der Zahlungsverkehrssteuerung
- Reduktion der Betriebskosten durch Synergien beim Betrieb mehrerer SAP Komponenten.

## Patentansprüche

1. Verfahren zum computerimplementierten Verarbeiten von elektronischen Zahlungsaufträgen, bei dem in einem ersten Schritt ein Auftragseingangsbearbeiter (Input Manager) von einem Vorsystem, das einen Zahlungsauftrag als Datei empfängt, unter Weitergabe von Datei-Informationen aufgerufen wird, in dem Auftragseingangsbearbeiter in dem Zahlungsauftrag enthaltene Gesamtauftragsdaten analysiert, die in dem Zahlungsauftrag enthaltenen Gesamtauftragsdaten in dem Auftragseingangsbearbeiter in zu einer Bearbeitung des Zahlungsauftrags notwendige Zahlungsauftragsdaten und in nicht zur Bearbeitung des Zahlungsauftrags notwendige Buchungsdaten aufgetrennt werden und der Auftragseingangsbearbeiter anhand der Datei-Informationen einen Format-Konverter erkennt, welcher die Zahlungsauftragsdaten in ein einheitliches Metaformat zur Bearbeitung in einer nachgeschalteten Zahlungsabwicklungseinrichtung (Payment Engine) konvertiert, in einem zweiten Schritt die Zahlungsauftragsdaten zur Bearbeitung an die nachgeschaltete Zahlungsabwicklungseinrichtung (Payment Engine) weitergegeben und die Buchungsdaten mit einer Verknüpfungsanweisung in einer Datenbank zwischengespeichert werden, in einem dritten Schritt die in das Metaformat konvertierten Zahlungsauftragsdaten in der nachgeschalteten Zahlungsabwicklungseinrichtung formal geprüft, Zusatzinformationen in einer Datenbank abgelegt, für jeden Zahlungsempfänger automatisch eine Leitwegerkennung und eine Clearingvereinbarung ermittelt wird sowie, abhängig von der Clearingvereinbarung, eine interne Bereitstellung eines Zahlungsauftragspostens erfolgt und in einem vierten Schritt automatisch erzeugte Angaben zu einem ausgehenden Zahlungsauftrag an einen Auftragsausgangsbearbeiter (Output Manager) übergeben, von diesem auf ein Zieldatenformat konvertiert und durch die in der Datenbank zwischengespeicherten Daten ergänzt werden.

2. Verfahren nach Anspruch 1, bei dem eine automatische Prüfung eines Auftraggebers des Zahlungsauftrags und - nach positiver Prüfung - eine sofortige Weitergabe des Zahlungsauftrags an den Auftragsausgangsbearbeiter erfolgt.

3. Verfahren nach Anspruch 1, bei dem die interne Bereitstellung des Zahlungsauftragspostens eine interne Reservierung des Zahlungsauftragspostens ist.

4. Verfahren nach Anspruch 3, bei dem die Reservierung auftraggeberorientiert und/oder empfängerorientiert erfolgt.

5. Verfahren nach Anspruch 3 oder 4, bei dem zu einem gegebenen Zeitpunkt die kumulierte Reservierung automatisch zu einem Sammelauftragsposten zusammengefaßt wird.

6. Vorrichtung zum computerimplementierten Verarbeiten von elektronischen Zahlungsaufträgen mit einem Auftragseingangsbearbeiter (Input Manager), einer Zahlungsabwicklungseinrichtung (Payment Engine), einem Auftragsausgangsbearbeiter (Output Manager) und einer Datenbank (File Handler-Datenbank), wobei der Auftragseingangsbearbeiter, nachdem er durch ein einen Zahlungsauftrag als Datei empfangendes Vorsystem unter Weitergabe von Datei-Informationen aufgerufen wurde, eine Analyse der in einem Zahlungsauftrag enthaltenen Gesamtauftragsdaten und eine Trennung der Gesamtauftragdaten in zu einer Bearbeitung des Zahlungsauftrags notwendige Zahlungsauftragsdaten und in nicht zur Bearbeitung des Zahlungsauftrags notwendige Buchungsdaten vornimmt und anhand der Datei-Informationen einen Format-Konverter erkennt, der die Zahlungsauftragsdaten in ein einheitliches Metaformat zur Bearbeitung in der nachgeschalteten Zahlungsabwicklungseinrichtung (Payment Engine) konvertiert, und, wobei die Buchungsdaten mit einer Verknüpfungsanweisung in der Datenbank zwischengespeichert werden, die nachgeschaltete Zahlungsabwicklungseinrichtung die in das Metaformat konvertierten Zahlungsauftragsdaten formal prüft, Zusatzinformationen in einer Datenbank ablegt, für jeden Zahlungsempfänger automatisch eine Leitwegerkennung und eine Clearingvereinbarung ermittelt sowie, abhängig von der Clearingvereinbarung, eine interne Bereitstellung des Zahlungsauftragspostens in der Zahlungsabwicklungseinrichtung vornimmt, und automatisch erzeugte Angaben zu einem ausgehenden Zahlungsauftrag an den Auftragsausgangsbearbeiter (Output Manager) übergibt, die der Auftragsausgangsbearbeiter auf ein Zieldatenformat konvertiert und durch die in der Datenbank zwischengespeicherten Daten ergänzt.

7. Vorrichtung nach Anspruch 6, in der eine automatische Prüfung eines Auftraggebers des Zahlungsauftrags und - nach positiver Prüfung - eine sofortige Weitergabe des Zahlungsauftrags an den Auftragsausgangsbearbeiter erfolgt.

8. Vorrichtung nach Anspruch 6, in der die interne Bereitstellung des Zahlungsauftragspostens eine interne Reservierung des Zahlungsauftragspostens ist.

9. Vorrichtung nach Anspruch 8, in der die Reservierung auftraggeberorientiert und/oder empfängerorientiert erfolgt.

10. Vorrichtung nach Anspruch 8 oder 9, in der zu einem gegebenen Zeitpunkt die kumulierte Reservierung automatisch zu einem Sammelauftragsposten zusammengefaßt wird.

11. Rechenzentrum mit zwei oder mehr Vorrichtungen nach einem der Ansprüche 6 bis 10.

12. Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einem Computer ein Verfahren nach einem der Ansprüche 1 bis 5 auszuführen.

13. Computerprogramm mit Programmcodemitteln, die dazu geeignet sind, bei Ablauf des Computerprogramms auf einem Computer ein Verfahren nach einem der Ansprüche 1 bis 5 auszuführen.

## Claims

1. A method for the computer-implemented processing of electronic payment instructions, comprising a first step of calling an input manager by a preprocessing system which receives a payment instruction as a file, while forwarding file information, analyzing total instruction data included in the payment instruction in the input manager, separating, by the input manager, the total instruction data included in the payment instruction into payment instruction data needed for processing the payment instruction and accounting data not needed for processing the payment instruction, and recognizing a format converter by the input manager on the basis of the file information, the input converter converting the payment instruction data into a uniform metaformat for processing in a subsequent payment engine, a second step of forwarding the payment instruction data for processing to the subsequent payment engine and temporarily storing the accounting data with a link instruction in a database, a third step of formally verifying the payment instruction data converted into the metaformat in the subsequent payment engine, storing additional information in a database, automatically determining a routing identification and a clearing agreement for each payment receiver, and internally providing a payment instruction item depending upon the clearing agreement, and a fourth step of forwarding automatically generated information relating to an outgoing payment instruction to an output manager, converting the information to a target data format by the output manager and completing this information by the data temporarily stored in the database.

2. Method according to Claim 1, wherein an originator of the payment instruction is automatically checked and, after a positive outcome of the check, the payment instruction is immediately forwarded to the output manager.

3. Method according to Claim 1, wherein the internal provision of the payment instruction item is an internal reservation of the payment instruction item.

4. Method according to Claim 3, wherein the reservation is made in an originator-oriented and/or a receiver-oriented manner.

5. Method according to Claim 3 or 4, wherein at a given time the cumulated reservation is automatically combined to form a collective instruction item.

6. A device for the computer-implemented processing of electronic payment instructions comprising an input manager, a payment engine, an output manager and a file handler database, wherein the input manager, after having been called by a preprocessing system receiving a payment instruction as a file while forwarding file information, performs an analysis of the total instruction data included in a payment instruction and separates the total instruction data into payment instruction data needed for processing the payment instruction and accounting data not needed for processing the payment instruction, and recognizes a format converter on the basis of the file information which converts the payment instruction data into a uniform metaformat for processing in the subsequent payment engine, and wherein the accounting data are temporarily stored with a link instruction in the database, the subsequent payment engine formally verifies the payment instruction data converted into the metaformat, stores additional information in a database, automatically determines a routing identification and a clearing agreement for each payment receiver, and internally provides the payment instruction item in the payment engine depending upon the clearing agreement, and forwards automatically generated information relating to an outgoing payment instruction to the output manager which the output manager converts into a target data format and completes by the data temporarily stored in the database.

7. Device according to Claim 6, wherein an originator of the payment instruction is automatically checked and, after a positive outcome of the check, the payment instruction is immediately forwarded to the output manager.

8. Device according to Claim 6, wherein the internal provision of the payment instruction item is an internal reservation of the payment instruction item.

9. Device according to Claim 8, wherein the reservation is made in an originator-oriented and/or a receiver-oriented manner.

10. Device according to Claim 8 or 9, wherein at a given time the cumulated reservation is automatically combined to form a collective instruction item.

11. Data processing center comprising two or more devices according to one of Claims 6 to 10.

12. Computer program product with a computer-readable medium and a computer program stored on the computer-readable medium including program code means suitable for carrying out a method according to one of Claims 1 to 5 when the computer program is run on a computer.

13. Computer program including program code means suitable for carrying out a method according to one of Claims 1 to 5 when the computer program is run on a computer.

## Revendications

1. Procédé pour le traitement mis en oeuvre par ordinateur d'instructions de paiement électronique, comportant une première étape consistant à appeler un gestionnaire d'entrée par l'intermédiaire d'un système de prétraitement lequel reçoit une instruction de paiement sous forme d'un fichier, tout en acheminant des informations de fichier, à analyser des données d'instruction totales incluses dans l'instruction de paiement dans le gestionnaire d'entrée, à séparer, par l'intermédiaire du gestionnaire d'entrée, les données d'instruction totales incluses dans l'instruction de paiement en données d'instruction de paiement nécessaires pour le traitement de l'instruction de paiement et en données comptables n'étant pas nécessaires pour le traitement de l'instruction de paiement, et à identifier un convertisseur de format par l'intermédiaire du gestionnaire d'entrée sur la base des informations de fichier, le convertisseur d'entrée convertissant les données d'instruction de paiement dans un méta-format uniforme en vue d'un traitement dans un moteur de paiement consécutif, une deuxième étape consistant à acheminer les données d'instruction de paiement en vue d'un traitement vers le moteur de paiement consécutif et à mémoriser temporairement les données comptables avec une instruction de lien dans une base de données, une troisième étape consistant à vérifier formellement les données d'instruction de paiement converties dans le méta-format dans le moteur de paiement consécutif, à mémoriser des informations supplémentaires dans une base de données, à déterminer automatiquement une identification de routage et un accord de compensation pour chaque récepteur de paiement, et à fournir en interne un élément d'instruction de paiement en fonction de l'accord de compensation, et une quatrième étape consistant à acheminer automatiquement des informations générées concernant une instruction de paiement sortante vers un gestionnaire de sortie, à convertir les informations dans un format de données cible par l'intermédiaire du gestionnaire de sortie et à compléter ces informations par les données mémorisées temporairement dans la base de données.

2. Procédé selon la revendication 1, dans lequel un émetteur de l'instruction de paiement est automatiquement contrôlé et, après un résultat positif du contrôle, l'instruction de paiement est immédiatement acheminée vers le gestionnaire de sortie.

3. Procédé selon la revendication 1, dans lequel la fourniture interne de l'élément d'instruction de paiement est une réservation interne de l'élément d'instruction de paiement.

4. Procédé selon la revendication 3, dans lequel la réservation est effectuée d'une manière orientée émetteur et/ou d'une manière orientée récepteur.

5. Procédé selon la revendication 3 ou 4 dans lequel, à un instant donné, la réservation cumulée est automatiquement combinée afin de former un élément d'instruction collectif.

6. Dispositif pour le traitement mis en oeuvre par ordinateur d'instructions de paiement électronique comportant un gestionnaire d'entrée, un moteur de paiement, un gestionnaire de sortie et une base de données de programme de traitement de fichiers, dans lequel le gestionnaire d'entrée, après avoir été appelé par un système de prétraitement recevant une instruction de paiement sous forme d'un fichier tout en acheminant des informations de fichier, effectue une analyse des données d'instruction totales incluses dans une instruction de paiement et sépare les données d'instruction totales en données d'instruction de paiement nécessaires pour le traitement de l'instruction de paiement et en données comptables n'étant pas nécessaires pour le traitement de l'instruction de paiement, et identifie un convertisseur de format sur la base des informations de fichier lequel convertit les données d'instruction de paiement dans un méta-format uniforme en vue d'un traitement dans le moteur de paiement consécutif, et dans lequel les données comptables sont temporairement mémorisées avec une instruction de lien dans la base de données, le moteur de paiement consécutif vérifie formellement les données d'instruction de paiement converties dans le méta-format, mémorise des informations supplémentaires dans une base de données, détermine automatiquement une identification de routage et un accord de compensation pour chaque récepteur de paiement, et fournit en interne l'élément d'instruction de paiement dans le moteur de paiement en fonction de l'accord de compensation, et achemine automatiquement des informations générées concernant une instruction de paiement sortante vers le gestionnaire de sortie que le gestionnaire de sortie convertit dans un format de données cible et complète par les données temporairement mémorisées dans la base de données.

7. Dispositif selon la revendication 6, dans lequel un émetteur de l'instruction de paiement est automatiquement contrôlé et, après un résultat positif du contrôle, l'instruction de paiement est immédiatement acheminée vers le gestionnaire de sortie.

8. Dispositif selon la revendication 6, dans lequel la fourniture interne de l'élément d'instruction de paiement est une réservation interne de l'élément d'instruction de paiement.

9. Dispositif selon la revendication 8, dans lequel la réservation est effectuée d'une manière orientée émetteur et/ou d'une manière orientée récepteur.

10. Dispositif selon la revendication 8 ou 9 dans lequel, à un instant donné, la réservation cumulée est automatiquement combinée afin de former un élément d'instruction collectif.

11. Centre de traitement de données comportant deux ou plus de deux dispositifs selon l'une des revendications 6 à 10.

12. Produit de programme informatique ayant un support lisible par ordinateur et un programme informatique mémorisé sur le support lisible par ordinateur incluant des moyens de code de programme appropriés pour mettre en oeuvre un procédé selon l'une des revendications 1 à 5 lorsque le programme informatique est exécuté sur un ordinateur.

13. Programme informatique incluant des moyens de code de programme appropriés pour mettre en oeuvre un procédé selon l'une des revendications 1 à 5, lorsque le programme informatique est exécuté sur un ordinateur.
